(19) Europäisches Patentamt / European Patent Office / Office européen des brevets

(11) EP 2 821 255 A1

(12) **EUROPEAN PATENT APPLICATION**
published in accordance with Art. 153(4) EPC

(43) Date of publication:
**07.01.2015 Bulletin 2015/02**

(21) Application number: **13755382.2**

(22) Date of filing: **28.02.2013**

(51) Int Cl.:
*B60C 5/01* (2006.01) *B60C 1/00* (2006.01)
*B60C 9/00* (2006.01) *C08L 67/00* (2006.01)
*C08L 77/00* (2006.01)

(86) International application number:
**PCT/JP2013/055585**

(87) International publication number:
**WO 2013/129630 (06.09.2013 Gazette 2013/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.03.2012 JP 2012045523**

(71) Applicant: **Bridgestone Corporation**
**Tokyo 104-8340 (JP)**

(72) Inventors:
- **FUKUSHIMA, Atsushi**
  **Tokyo 104-8340 (JP)**
- **FUDEMOTO, Hiroyuki**
  **Tokyo 104-8340 (JP)**
- **HARADA, Takashi**
  **Tokyo 104-8340 (JP)**

(74) Representative: **Kreller-Schober, Maria**
**Bardehle Pagenberg Partnerschaft mbB**
**Patentanwälte, Rechtsanwälte**
**Prinzregentenplatz 7**
**81675 München (DE)**

# (54) TIRE

(57) A tire including a circular tire frame formed from a resin material, wherein the resin material has a loss coefficient (tan δ) peak temperature of 30°C or lower.

FIG. A

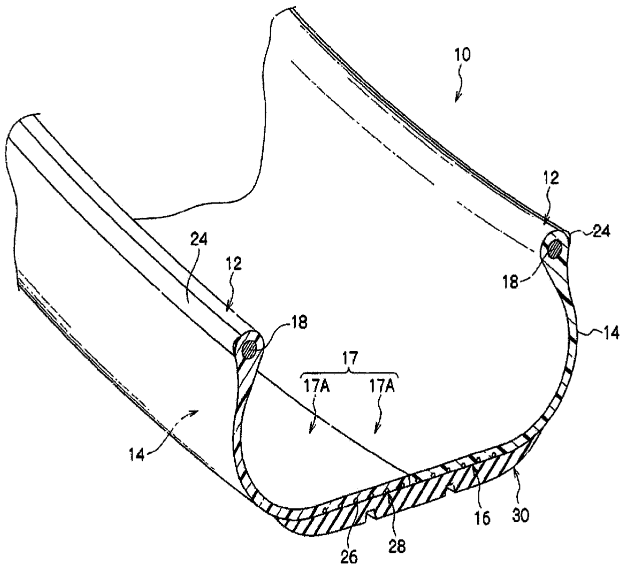


EP 2 821 255 A1

FIG. 1B

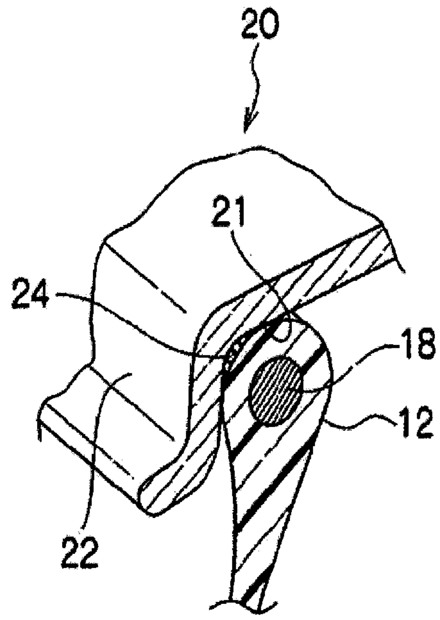

## Description

### Technical Field

The present invention relates to a tire for fitting onto a rim, and in particular relates to a tire in which at least a portion of a tire case is formed of a resin material.

### Background Art

Known pneumatic tires employed in vehicles such as cars are configured from rubber, organic fiber materials, steel members, and the like.

Recently, the use of resin materials, in particular thermoplastic resins, thermoplastic elastomers, and the like, as tire materials is being investigated from the perspectives of weight reduction, ease of molding, and ease of recycling.

For example, Patent Document 1 (Japanese Patent Application Laid-Open (JP-A) No. 2003-104008), and Patent Document 2 (JP-A No. H03-143701) describe a pneumatic tire formed using a thermoplastic polymer material.

Pneumatic tires formed from polymer materials such as plural rubbers and thermoplastic resins, have been proposed, in which the rigidity gradually decreases on progression from a center position of a tread portion, through a shoulder portion, to a maximum width position of a side wall portion, and in which the rigidity gradually increases on progression from the maximum width position of the side wall portion toward a bead portion (see for example Patent Document 3 below (Japanese Patent No. 4501326)).

### Prior Art Documents

Patent Document 1: JP-A No. 2003-104008
Patent Document 2: JP-A No. H03-143701
Patent Document 3: Japanese Patent No. 4501326

## SUMMARY OF INVENTION

### Technical Problem

A tire using a polymer material with thermoplastic properties is more easily manufactured and lower in cost than a conventional rubber-made tire. However, in cases in which a tire frame is formed with a uniform thermoplastic polymer material that does not incorporate a reinforcing member, such as a carcass ply or the like, there is still room for improvement from viewpoints such as withstanding stress, and withstanding internal pressure, compared to a conventional rubber-made tire.

Moreover, a tire is expected to be employed not only at normal temperature, but also in low temperature ranges, such as 0°C or lower. There is accordingly demand for development of a tire that maintains various properties in low temperature ranges.

Patent Document 3 describes a tire with a specified rigidity, in which plural polymer materials are combined. However, this Patent Document makes no mention regarding performance of the tire in low temperature ranges. Patent Document 3 moreover makes no reference regarding what sort of low temperature properties should be included in a material forming the tire frame.

In consideration of the above circumstances, an object of the invention is to provide a tire that is formed using a resin material and that has excellent impact resistance under low temperatures.

### Solution to Problem

(1) A tire including a circular tire frame formed from a resin material, in which the resin material has a loss coefficient (tan $\delta$) peak temperature of 30°C or lower. Advantageous Effects of Invention

According to the invention, a tire can be provided that is formed using a resin material and that has excellent impact resistance under low temperatures.

BRIEF DESCRIPTION OF DRAWINGS

Fig. 1A is a perspective view illustrating a cross-section of a portion of a tire according to an embodiment of the invention.

Fig. 1B is a cross-section of a bead portion that has been fitted onto a rim.

Fig. 2 is a cross-section taken along the tire rotation axis of a tire of a first embodiment, and illustrating a state in which reinforcing cord is embedded in a crown portion of a tire case.

Fig. 3 is an explanatory diagram to explain an operation to embed the reinforcing cord in the crown portion of a tire case using a cord heating device and rollers.

Fig. 4A is a cross-section taken along the tire width direction of a tire of an embodiment of the invention.

Fig. 4B is an enlarged cross-section taken along the tire width direction of a bead portion in a state fitted onto a rim.

Fig. 5 is a cross-section taken along the tire width direction and illustrating the periphery of a reinforcing layer of a tire according to a second embodiment.

DESCRIPTION OF EMBODIMENTS

The tire of the invention includes a circular tire frame formed from a resin material, wherein the resin material has a loss coefficient (tan δ) peak temperature of 30°C or lower.

According to the tire of the invention, the resin material included in the tire frame has a loss coefficient (tan δ) peak temperature of 30°C or lower, thereby enabling excellent impact resistance in low temperatures (for example, of 0°C or below). Moreover, due to forming the tire with a resin material, the need for a vulcanization process, that was an essential process for a conventional rubber-made tire, is not necessary, enabling the tire frame to be formed by, for example, injection molding or the like. Moreover, employing a resin material for the tire frame enables the structure of a tire to be simplified compared to a conventional rubber-made tire, and as a result enables a tire weight reduction to be achieved.

Generally, in tires employing a resin material, external impact causes tiny air bubbles to form on the surface, such that the impact site sometimes turns white. The occurrence of such whitening of the tire surface due to impact is detrimental to the appearance of the tire. However, the tire of the invention exhibits a strong suppressing effect with respect to such whitening due to impact.

The "loss coefficient (tan δ)" of the resin material refers to the loss coefficient under 20 Hz and shear strain of 1% (sometimes referred to below simply as "tan δ"). The loss coefficient (tan δ) is a value calculated from the ratio (G"/G') of the shear storage modulus (G') and the shear loss modulus (G"), and is a value expressing the extent to which energy is absorbed (is transformed into heat) by a material during deformation of the material. The higher the value of tan δ, the more energy is absorbed, this being a cause of an increase in tire rolling resistance, resulting in a drop in fuel efficiency performance for the tire. Note that the tan δ of the resin material may be measured using dynamic viscoelasticity measuring equipment (Dynamic-Mechanical Analysis (DMA)).

"A loss coefficient (tan δ) peak temperature of 30°C or lower" means that a loss coefficient peak of the resin material arises in a temperature range of 30°C or lower when measured as described above at 20 Hz and shear strain of 1%. In the present specification, reference to the "peak temperature" of the loss coefficient (tan δ) refers to the temperature at which the peak of the loss coefficient (tan δ) arises. In cases in which the resin material includes plural types of thermoplastic elastomer and/or non-elastomer thermoplastic resin, sometimes plural loss coefficient (tan δ) peaks can arise. In such cases, it is sufficient for at least one of the loss coefficient (tan δ) peak temperatures to be 30°C or lower.

The measurement conditions for the loss coefficient (tan δ) peak temperature may be set to, for example, measurement temperature range: from -100°C to 150°C, temperature increase rate: 6°C/min, frequency: 20 Hz, strain: 1%, and the peak temperature can be taken as the temperature at which the loss coefficient (tan δ) peaks on a temperature curve plotted based on the measured values.

The loss coefficient (tan δ) peak temperature of the resin material is preferably 0°C or lower, and is more preferably -20°C or below. A peak temperature within these ranges enables sufficient impact resistance to be exhibited, and enables a whitening suppressing effect to be effectively exhibited in low temperature environments. Although there are no particular issues relating to the lower limit of the peak temperature, from the viewpoint of securing rigidity within a normal usage range (a range of 30°C plus or minus 20°C), -80°C or higher is preferable, and -60°C or higher is more preferable.

Δ tan δ, derived using Equality (X) below, of the resin material included in the tire frame is preferably small, and more preferably satisfies $0 < \Delta \tan \delta \leq 5.2 \times 10^{-4}$.

$$\text{Equality (X):}\quad \Delta\tan\delta = (\tan\delta_{max}(T) - \tan\delta_{max\text{-}10°C}(T))/(T_{maxtan\,\delta} - T_{maxtan\,\delta\,-\,10°C}) = (\tan\delta_{max}(T) - \tan\delta_{max\,-\,10°C}(T))/10$$

In Equality (X), tan $\delta_{max}$ (T) is the loss coefficient (tan δ) at the peak temperature; tan $\delta_{max\text{-}10°C}$ (T) is the loss coefficient (tan δ) at the {peak temperature - -10°C}: $T_{maxtan\,\delta}$ is the peak temperature; and $T_{maxtan\,\delta\,-\,10°C}$ is the {peak temperature - 10°C}.

Δ tan δ refers to the slope (gradient) between two points of the loss coefficient (tan δ), one of which occurring at the peak temperature and the other of which occurring at the {peak temperature - 10°C}, on a graph showing loss coefficient (tan δ) against increasing temperature. When the Δ tan δ is large, a physical property (hardness) of the resin material sometimes undergoes a sudden change at the glass transition temperature (Tg) (at the apex (peak) of the curve of the tan δ in the graph mentioned above) of the resin material. Since normally the internal pressure of a tire and the configuration of a vehicle body are constant with temperature, it is preferable that the physical properties of the tire do not undergo sudden change when the tire is employed at the glass transition temperature of the resin material or below from the viewpoint of the relationship to adsorption of impacts from the road surface and the like. Accordingly, as described above, when < Δ tan $\delta \leq 5.2 \times 10^{-4}$ is satisfied, sudden changes in impact absorbing properties can be reduced under low temperature conditions, and the effect of suppressing whitening due to impact can be improved.

The Δ tan δ described above can be measured using dynamic viscoelasticity measurement equipment (Dynamic-Mechanical Analysis (DMA)). Specifically, the measurement conditions for the loss coefficient (tan δ) peak temperature are set at measurement temperature range: -100°C to 150°C, temperature increase rate: 6°C/minute, frequency: 20 Hz, and strain: 1%. The Δ tan δ can be calculated by plotting a temperature curve based on the measured values, and measuring the loss coefficient (tan δ) peak temperature.

Explanation follows regarding resin materials included in a tire frame of the invention, followed by explanation regarding specific embodiments of a tire of the invention, with reference to the drawings.

Resin Material

The resin material of the invention includes resin, with the resin selected so as to give a loss coefficient (tan δ) peak temperature of the resin material of 30°C or lower.

In the invention, the "resin material" includes at least a resin (resin component), and may further include other components such as additives. In cases in which the resin material does not include a component other than the resin component, the resin material is formed only of resin.

In the present specification, "resin" includes thermoplastic resins, and thermosetting resins, but does not include natural rubber. Thermoplastic resin includes thermoplastic elastomers.

The meaning here of "elastomer" is a resin formed of a copolymer including a polymer forming a hard segment that is crystalline and has a high melting point or a hard segment that has a high cohesive force, and including a polymer forming a soft segment that is amorphous and has a low glass transition temperature.

Resin

Examples of the resin include a thermoplastic resin (thermoplastic elastomers included) and thermosetting resins. The resin material may employ a single thermoplastic elastomer, described later, may include a combination of plural thereof, and may include a combination of a thermoplastic elastomer and a non-elastomer thermoplastic resin. When the resin material only includes a single resin, the loss coefficient (tan δ) peak temperature of the resin is the peak temperature of the resin material. In particular, when the resin is a thermoplastic elastomer, the loss coefficient (tan δ) peak temperature of the resin material is liable to be dependent on the loss coefficient (tan δ) of the soft segment of the thermoplastic elastomer. The resin is selected such that the loss coefficient (tan δ) peak temperature of the resin material is 30°C or lower; however, in cases in which the resin material resulting from a combination of plural resins exhibits plural peak temperatures, the various resins are selected such that the resin material in which they are included has at least one loss coefficient (tan δ) peak temperature of 30°C or lower.

The resin material forming the tire frame is preferably a thermoplastic resin, and is more preferably a thermoplastic elastomer. Explanation follows regarding resins that may be employed as the resin material forming the tire frame, focusing on thermoplastic resins.

Thermoplastic Resins (Thermoplastic Elastomers Included)

Thermoplastic resins (thermoplastic elastomers included) are polymer compounds that materially soften and

flow with increasing temperature, and that adopt a relatively hard and strong state on cooling.

In the present specification, polymer compounds among the thermoplastic resins that materially soften and flow with increasing temperature, that adopt a relatively hard and strong state on cooling, and that have a rubber-like elasticity, are considered to be thermoplastic elastomers. These are discriminated from polymer compounds among the thermoplastic resins that materially soften and flow with increasing temperature, and adopt a relatively hard and strong state on cooling, but do not have a rubber-like elasticity, considered to be non-elastomer thermoplastic resins.

Examples of thermoplastic resins (thermoplastic elastomers included) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically vulcanized thermoplastic elastomers (TPV), as well as non-elastomer thermoplastic polyolefin-based resins, non-elastomer thermoplastic polystyrene-based resins, non-elastomer thermoplastic polyamide-based resins, and non-elastomer thermoplastic polyester-based resins. The thermoplastic resin included in the resin material is preferably at least one selected from the group consisting of a thermoplastic polyester-based elastomer and a thermoplastic polyamide-based elastomer.

Thermoplastic Polyester-based Elastomer

Examples of the thermoplastic polyester-based elastomer include materials with at least a polyester forming a hard segment that is crystalline and has a high melting point, and another polymer (such as a polyester or a polyether) that forms a soft segment that is amorphous with a low glass transition temperature.

Thermoplastic polyester-based elastomers are also referred to as ThermoPlastic polyester elastomers ("TPC").

An aromatic polyester may be employed as the polyester that forms the hard segment. The aromatic polyester may be formed of, for example, an aromatic dicarboxylic acid, or an ester-forming derivative thereof, and an aliphatic diol. The aromatic polyester is preferably polybutylene terephthalate derived from terephthalic acid and/or dimethyl terephthalate, and 1,4-butanediol. Moreover, the aromatic polyester may be a polyester derived from a dicarboxylic acid component such as isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, or 5-sulfoisophthalic acid, or an ester-forming derivative thereof, and a diol with a molecular weight of 300 or less, for example: an aliphatic diol such as ethylene glycol, trimethylene glycol, pentamethylene glycol, hexamethylene glycol, neopentyl glycol, or decamethylene glycol; an alicyclic diol such as 1,4-cyclohexane dimethanol, or tricyclodecane dimethylol; or an aromatic diol such as xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-p-terphenyl, or 4,4'-dihydroxy-p-quaterphenyl. Moreover, the aromatic polyester may be a copolymer polyester that employs two or more of the above dicarboxylic acid components and diol components in combination. Copolymerization can also be made with a polyfunctional carboxylic acid component, a polyfunctional oxyacid component, a polyfunctional hydroxy component, or the like, having three or more functional groups, in a range of 5% by mol or less.

Examples of polyesters to form the hard segment include polyethylene terephthalate, polybutylene terephthalate, polymethylene terephthalate, polyethylene naphthalate, and polybutylene naphthalate, with polybutylene terephthalate being preferable.

Aliphatic polyesters, and aliphatic polyethers are examples of polymers to form the soft segment.

Examples of the aliphatic polyether include poly(ethylene oxide)glycol, poly(propylene oxide)glycol, poly(tetramethylene oxide)glycol, poly(hexamethylene oxide)glycol, a copolymer of ethylene oxide and propylene oxide, an ethylene oxide adduct of poly(propylene oxide)glycol, and a copolymer of ethylene oxide and tetrahydrofuran.

Examples of the aliphatic polyester include poly(ε-caprolactone), polyenantholactone, polycaprylolactone, polybutylene adipate, and polyethylene adipate.

Of these aliphatic polyethers and aliphatic polyesters, poly(tetramethylene oxide)glycol, poly(propylene oxide)glycol that is an ethylene oxide addition product, poly(ε-caprolactone), polybutylene adipate, polyethylene adipate, or the like is preferable from the viewpoint of the elasticity characteristics of the obtainable polyester block copolymer.

Moreover, from the viewpoints of toughness and flexibility at low temperature, the number average molecular weight of the polymer forming the soft segment is preferably from 300 to 6000. Moreover, from the viewpoint of formability, the mass ratio (x:y) of the hard segment (x) to the soft segment (y) is preferably from 99:1 to 20:80, and still more preferably from 98:2 to 30:70.

Examples of the above combination of hard segment and soft segment may include respective combinations of the hard segments and the soft segments described above. Of these, a combination in which the hard segment is polybutylene terephthalate and the soft segment is an aliphatic polyether is preferable, and a combination in which the hard segment is polybutylene terephthalate and the soft segment is poly(ethylene oxide)glycol is still more preferable.

As the thermoplastic polyester-based elastomer, for example, commercial products from the "HYTREL" series (such as, for example, 3046, 5557, 6347, 4047, 4767, and 7247), manufactured by Du Pont-Toray Co., Ltd., and from

the "PELPRENE" series (such as P30B, P40B, P40H, P55B, P70B, P150B, P280B, P450B, P150M, S1001, S2001, S5001, S6001, and S9001), manufactured by Toyobo Co., Ltd., may be employed.

Thermoplastic Polyamide-based Elastomer

In the invention, "thermoplastic polyamide-based elastomer" refers to a thermoplastic resin material that is formed of a copolymer having a polymer forming a hard segment that is crystalline and has a high melting point, and a polymer forming a soft segment that is amorphous and has a low glass transition temperature, wherein the polymer forming the hard segment has amide bonds (-CONH-) in the main chain thereof.
The thermoplastic polyamide-based elastomer is also sometimes simply referred to as ThermoPlastic Amid elastomer ("TPA").
Examples of the thermoplastic polyamide-based elastomer include materials with at least a polyamide forming a hard segment that is crystalline and has a high melting point, and with another polymer (such as, for example, a polyester, or a polyether) that forms a soft segment that is amorphous and has a low glass transition temperature. The thermoplastic polyamide-based elastomer may also employ a chain extender, such as a dicarboxylic acid, as well as the hard segment and the soft segment. Examples of polyamides for forming the hard segment include polyamides generated from monomers represented by the following Formula (1) or Formula (2).

Formula (1): $H_2N\text{-}R^1\text{-}COOH$

In Formula (1), $R^1$ represents a hydrocarbon molecular chain having from 2 to 20 carbon atoms, or an alkylene group having from 2 to 20 carbon atoms.

Formula (2)

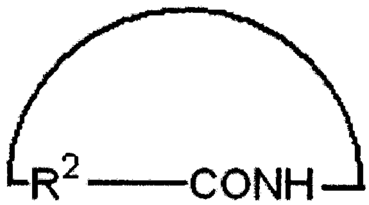

In Formula (2), $R^2$ represents a hydrocarbon molecular chain having from 3 to 20 carbon atoms, or an alkylene group having from 3 to 20 carbon atoms.
The $R^1$ in Formula (1) is preferably a hydrocarbon molecular chain having from 3 to 18 carbon atoms, or an alkylene group having from 3 to 18 carbon atoms, still more preferably a hydrocarbon molecular chain having from 4 to 15 carbon atoms, or an alkylene group having from 4 to 15 carbon atoms, and particularly preferably a hydrocarbon molecular chain having from 10 to 15 carbon atoms, or an alkylene group having from 10 to 15 carbon atoms. Moreover, the $R^2$ in Formula (2) is preferably a hydrocarbon molecular chain having from 3 to 18 carbon atoms, or an alkylene group having from 3 to 18 carbon atoms, is still more preferably a hydrocarbon molecular chain having from 4 to 15 carbon atoms, or an alkylene group having from 4 to 15 carbon atoms, and is particularly preferably a hydrocarbon molecular chain having from 10 to 15 carbon atoms, or an alkylene group having from 10 to 15 carbon atoms.
ω-aminocarboxylic acids and lactams are examples of the monomers represented by Formula (1) or Formula (2) above. Moreover, examples of the polyamide that forms the hard segment include polycondensates of such ω-aminocarboxylic acids and lactams, and copolycondensates of diamines and dicarboxylic acids.
Examples that may be employed as the ω-aminocarboxylic acid include aliphatic ω-aminocarboxylic acids having from 5 to 20 carbon atoms, such as 6-aminocaproic acid, 7-aminoheptanoic acid, 8-aminooctanoic acid, 10-aminocapric acid, 11-aminoundecanoic acid, or 12-aminododecanoic acid. Examples that may be employed as the lactam include aliphatic lactams having from 5 to 20 carbon atoms, such as lauryl lactam, ε-caprolactam, undecanolactam, ω-enantholactam, or 2-pyrrolidone.
Examples that may be employed as the diamine include diamine compounds such as aliphatic diamines having from 2 to 20 carbon atoms such as ethylene diamine, trimethylene diamine, tetramethylene diamine, hexamethylene diamine, heptamethylene diamine, octamethylene diamine, nonamethylene diamine, decamethylene diamine, undecamethylene diamine, dodecamethylene diamine, 2,2,4-trimethylhexamethylene diamine, 2,4,4-trimethylhexamethylene diamine, 3-methylpentamethylene diamine, or metaxylenediamine. Moreover, $HOOC\text{-}(R^3)m\text{-}COOH$ (wherein, $R^3$ is a hydrocarbon molecular chain having from 3 to 20 carbon atoms, and m is 0 or 1) may represent the dicarboxylic acid; for example, an aliphatic dicarboxylic acid having from 2 to 20 carbon atoms such as oxalic acid, succinic acid, glutaric

acid, adipic acid, pimelic acid, suberic acid, azelaic acid, sebacic acid, or dodecanedioic acid.

A polyamide formed by ring-opened polycondensation of lauryl lactam, ε-caprolactam or undecanolactam may be preferably employed as the polyamide that forms the hard segment.

Examples of the polymer that forms the soft segment include polyesters and polyethers, with examples thereof including polyethylene glycol, polypropylene glycol, polytetramethylene ether glycol, and ABA-type triblock polyethers. These may be employed singly, or in a combination of two or more thereof. Moreover, a polyether diamine or the like, obtained via a reaction of ammonia or the like with a terminal unit of a polyether, may be employed.

Herein, "ABA-type triblock polyether" indicates a polyether represented by Formula (3) below.

Formula (3)

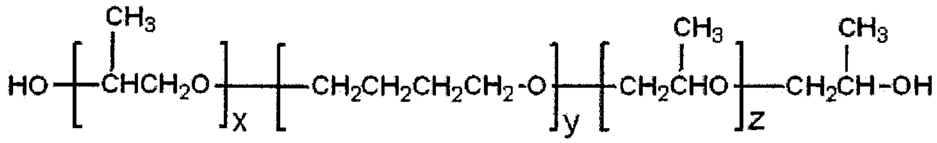

In Formula (3), x and z in Formula (3) represent integers of from 1 to 20, and y represents an integer of from 4 to 50.

As the respective values of the x and the z in Formula (3), integers of from 1 to 18 are preferable, integers of from 1 to 16 are more preferable, integers of from 1 to 14 are particularly preferable, and integers of from 1 to 12 are most preferable. Moreover, as the value of y in Formula (3), an integer of, respectively, from 5 to 45 is preferable, an integer of from 6 to 40 is more preferable, an integer of from 7 to 35 is particularly preferable, and an integer of from 8 to 30 is most preferable.

Respective combinations of the hard segments and the soft segments described above are examples of the combination of the hard segment and the soft segment. Preferable combinations from among these are a combination of a ring-opened polycondensate of lauryl lactam and polyethylene glycol, a combination of a ring-opened polycondensate of lauryl lactam and polypropylene glycol, a combination of a ring-opened polycondensate of lauryl lactam and polytetramethylene ether glycol, and a combination of a ring-opened polycondensate of lauryl lactam and an ABA-type triblock polyether. The combination of a ring-opened polycondensate of lauryl lactam and an ABA-type triblock polyether is particularly preferable.

From the viewpoint of melt-molding property, the number average molecular weight of the polymer (polyamide) forming the hard segment is preferably from 300 to 15000. From the viewpoints of toughness and low temperature flexibility, the number average molecular weight of the polymer forming the soft segment is preferably from 200 to 6000. From the viewpoint of formability, the mass ratio (x:y) of the hard segment (x) to the soft segment (y) is preferably from 50:50 to 90:10, and is more preferably from 50:50 to 80:20.

The thermoplastic polyamide-based elastomer may be synthesized by, using a known method, subjecting a polymer forming the hard segment and a polymer forming the soft segment described above to copolymerization.

Examples of commercial products employable as the thermoplastic polyamide-based elastomer include products from the "UBESTA XPA" series (examples include XPA9063X1, XPA9055X1, XPA9048X2, XPA9048X1, XPA9040X1, and XPA9040X2XPA9044), manufactured by Ube Industries, Ltd., and products from the "VESTAMID" series (for example, E40-S3, E47-S1, E47-S3, E55-S1, E55-S3, EX9200, and E50-R2), manufactured by Daicel-Evonik Ltd.

Thermoplastic Polyolefin-based Elastomer

Examples of the "thermoplastic polyolefin-based elastomer" include materials with at least a polyolefin forming a hard segment that is crystalline and has a high melting point, and another polymer (for example the polyolefin or another polyolefin) that forms a soft segment that is amorphous and has a low glass transition temperature. Examples of polyolefins to form the hard segment include polyethylene, polypropylene, isotactic polypropylene, and polybutene.

The thermoplastic polyolefin-based elastomer is also sometimes simply referred to as ThermoPlastic Olefin elastomer ("TPO").

The thermoplastic polyolefin-based elastomer is not particularly limited, and examples include copolymers including a polyolefin forming a hard segment that is crystalline and has a high melting point, and including a polymer forming the soft segment that is amorphous and has a low glass transition temperature.

Examples of the thermoplastic polyolefin-based elastomer include olefin-α-olefin random copolymers, and olefin block copolymers, with examples thereof including propylene block copolymers, ethylene-propylene copolymers, propylene-1-hexene copolymers, propylene-4-methyl-lpentene copolymers, propylene-1-butene copolymers, ethylene-1-hexene copolymers, ethylene-4-methyl-pentene copolymers, ethylene-1-butene copolymers, 1-butene-1-hexene copolymers, 1-butene-4-methyl-pentene, ethylene-methacrylic acid copolymers, ethylene-methyl methacrylate copolymers, ethylene-ethyl methacrylate copolymers, ethylene-butyl methacrylate copolymers, ethylene-methyl acrylate copolymers, ethylene-ethyl acrylate copolymers, ethylene-butyl acrylate copolymers, propylene-methacrylic acid copolymers, propylene-methyl methacrylate copolymers, propylene-ethyl methacrylate copolymers, propylene-butyl methacrylate copolymers, propylene-methyl acrylate copolymers, propylene-ethyl acrylate copolymers, propylene-butyl acrylate copolymers, ethylene-acetic acid vinyl copolymers, and propylene-vinyl acetate copolymers.

Preferable examples of the thermoplastic polyolefin-based elastomer include propylene block copolymers, ethylene-propylene copolymers, propylene-1-hexene copolymers, propylene-4-methyl-1pentene copolymers, propylene-1-butene copolymers, ethylene-1-hexene copolymers, ethylene-4-methyl-pentene copolymers, ethylene-1-butene copolymers, ethylene-methacrylic acid copolymers, ethylene-methyl methacrylate copolymers, ethylene-ethyl methacrylate copolymers, ethylene-butyl methacrylate copolymers, ethylene-methyl acrylate copolymers, ethylene-ethyl acrylate copolymers, ethylene-butyl acrylate copolymers, propylene-methacrylic acid copolymers, propylene-methyl methacrylate copolymers, propylene-ethyl methacrylate copolymers, propylene-butyl methacrylate copolymers, propylene-methyl acrylate copolymers, propylene-ethyl acrylate copolymers, propylene-butyl acrylate copolymers, ethylene-vinyl acetate copolymers, and propylene-vinyl acetate copolymers, and still more preferable examples thereof include ethylene-propylene copolymers, propylene-1-butene copolymers, ethylene-1-butene copolymers, ethylene-methyl methacrylate copolymers, ethylene-methyl acrylate copolymers, ethylene-ethyl acrylate copolymers, and ethylene-butyl acrylate copolymers.

Moreover, two or more polyolefin resins, such as ethylene and propylene, may be used in combination. Moreover, the polyolefin content ratio in the thermoplastic polyolefin-based elastomer is preferably from 50% by mass to 100% by mass.

The number average molecular weight of the thermoplastic polyolefin-based elastomer is preferably from 5,000 to 10,000,000. If the number average molecular weight of the thermoplastic polyolefin-based elastomer is from 5,000 to 10,000,000, the resin material has sufficient mechanical physical properties and excellent processability. From similar viewpoints, the number average molecular weight is more preferably from 7,000 to 1,000,000, and is particularly preferably from 10,000 to 1,000,000. This thereby enables further improvements to the mechanical physical properties and processability of the resin material. From the viewpoints of toughness and low temperature flexibility, the number average molecular weight of the polymer forming the soft segment is preferably from 200 to 6000. From the viewpoint of formability, the mass ratio (x:y) of the hard segment (x) to the soft segment (y) is preferably from 50:50 to 95:5, and is still more preferably from 50:50 to 90:10.

A thermoplastic polyolefin-based elastomer may be synthesized by, using a known method, subjecting a polymer forming the hard segment and a polymer forming the soft segment to copolymerization.

An acid-modified thermoplastic elastomer may be employed as the thermoplastic polyolefin-based elastomer.

An "acid-modified thermoplastic polyolefin-based elastomer" means a thermoplastic polyolefin-based elastomer that is acid modified by causing an unsaturated compound having an acid group such as a carboxylic acid group, a sulfuric acid group, or a phosphoric acid group to bond with an unmodified thermoplastic polyolefin-based elastomer. For example, when an unsaturated carboxylic acid (generally, maleic acid anhydride) is employed as the unsaturated compound having an acid group, an unsaturated bond site of the unsaturated carboxylic acid is caused to bond with (for example, by graft polymerization) a thermoplastic polyolefin-based elastomer.

From the viewpoint of suppressing degradation of the thermoplastic polyolefin-based elastomer, the compound having an acid group is preferably a compound having a carboxylic acid group that is a weak acid group, and examples that may be employed therefor include acrylic acid, methacrylic acid, itaconic acid, crotonic acid, isocrotonic acid, and maleic acid.

Examples of commercial products employable as the thermoplastic polyolefin-based elastomer described above include products from the "TAFMER" series (for example, A0550S, A1050S, A4050S, A1070S, A4070S, A35070S, A1085S, A4085S, A7090, A70090, MH7007, MH7010, XM-7070, XM-7080, BL4000, BL2481, BL3110, BL3450, P-0275, P-0375, P-0775, P-0180, P-0280, P-0480, and P-0680), manufactured by Mitsui Chemicals, Inc., products from the "NUCREL" series (for example, AN4214C, AN4225C, AN42115C, N0903HC, N0908C, AN42012C, N410, N1050H, N1108C, N1110H, N1207C, N1214, AN4221C, N1525, N1560, N0200H, AN4228C, AN4213C, and N035C) and products from the "ELVALOY AC" series (for example, 1125AC, 1209AC, 1218AC, 1609AC, 1820AC, 1913AC, 2112AC, 2116AC, 2615AC, 2715AC, 3117AC, 3427AC, and 3717AC), manufactured by Du Pont-Mitsui Polychemicals Co., Ltd., products from the "ACRYFT" series and products from the "EVATATE" series, manufactured by Sumitomo Chemical Co., Ltd., and products from the "ULTRA SEN" series, manufactured by Tosoh Corporation.

Moreover, commercial products employable as the thermoplastic polyolefin-based elastomer also include, for example, products from the "PRIME TPO" series (examples include, E-2900H, F-3900H, E-2900, F-3900, J-5900, E-2910, F-3910, J-5910, E-2710, F-3710, J-5710, E-2740, F-3740, R110MP, R110E, T310E, and M142E), manufactured by Prime Polymer Co., Ltd.

Thermoplastic Polystyrene-based Elastomer

Examples of the thermoplastic polystyrene-based elastomer include materials with at least polystyrene forming the hard segment, and with another polymer (for example polybutadiene, polyisoprene, polyethylene, hydrogenated polybutadiene, hydrogenated polyisoprene, or the like) forming the soft segment with a low glass transition temperature. Synthetic rubbers, such as vulcanized SBR resins or the like, may be used as the thermoplastic polystyrene-based elastomer.

Thermoplastic polystyrene-based elastomers are sometimes referred to as ThermoPlastic Styrene elastomers ("TPS").

Either an acid-modified thermoplastic polystyrene-based elastomer modified with an acid group, or an unmodified thermoplastic polystyrene-based elastomer may be employed as the thermoplastic polystyrene-based elastomer.

Examples of polystyrenes that may be suitably employed for forming the hard segment include those obtained using known radical polymerization methods, or those obtained using known ionic polymerization methods, for example a polystyrene having an anionic living polymer form. Examples of polymers for forming the soft segment include polybutadiene, polyisoprene, poly(2,3-dimethyl-butadiene), and the like. The acid-modified thermoplastic polystyrene-based elastomer may be obtained by acid-modifying an unmodified thermoplastic polystyrene-based elastomer, as described below.

Respective combinations of the hard segment and the soft segment described above are examples of the above combination of the hard segment and the soft segment. Of these, a combination of polystyrene/polybutadiene, or a combination of polystyrene/polyisoprene, is preferable. Moreover, to suppress unintended crosslinking reactions of the thermoplastic elastomer, the soft segment is preferably hydrogenated.

The number average molecular weight of the polymer (polystyrene) forming the hard segment is preferably from 5000 to 500000, and preferably from 10000 to 200000.

Moreover, the number average molecular weight of the polymer forming the soft segment is preferably from 5000 to 1000000, more preferably from 10000 to 800000, and particularly preferably from 30000 to 500000. Moreover, from the viewpoint of formability, the volume ratio (x:y) of the hard segment (x) to the soft segment (y) is preferably from 5:95 to 80:20, and still more preferably from 10:90 to 70:30.

The thermoplastic polystyrene-based elastomer may be synthesized by, using a known method, subjecting a polymer forming the hard segment and a polymer forming the soft segment described above to copolymerization.

Examples of the thermoplastic polystyrene-based elastomer include styrene-butadiene-based copolymers [SBS (polystyrene-poly(butylene)block-polystyrene), and SEBS (polystyrene-poly(ethylene/butylene)block-polystyrene)], styrene-isoprene copolymers [polystyrene-polyisoprene block-polystyrene)], and styrene-propylene-based copolymers [SEP (polystyrene-(ethylene/propylene)block), SEPS (polystyrene-poly(ethylene/propylene)block-polystyrene), SEEPS (polystyrene-poly(ethylene-ethylene/propylene)block-polystyrene)], and SEB (polystyrene (ethylene/butylene)block), and SEBS is particularly preferable.

Examples of commercial products that may be used as the unmodified thermoplastic polystyrene-based elastomer include those from the "TUFTEC" series (for example, H1031, H1041, H1043, H1051, H1052, H1053, H1062, H1082, H1141, H1221, or H1272), manufactured by Asahi Kasei Corporation, SEBS (such as "HYBRAR" 5127, or 5125), and SEPS (such as "SEPTON" 2002, 2063, S2004, or S2006), manufactured by Kuraray Co., Ltd.

Acid-modified Thermoplastic Polystyrene-based Elastomer

"Acid-modified thermoplastic polystyrene-based elastomer" refers to a thermoplastic polystyrene-based elastomer that is acid modified by causing an unsaturated compound having an acid group such as a carboxylic acid group, a sulfuric acid group, or a phosphoric acid group to bond with an unmodified thermoplastic polystyrene-based elastomer. The acid-modified thermoplastic polystyrene-based elastomer may be obtained by, for example, causing an unsaturated bond site of an unsaturated carboxylic acid or an unsaturated carboxylic acid anhydride to bond (for example, by graft polymerization) with a thermoplastic polystyrene-based elastomer.

From the viewpoint of suppressing degradation of the thermoplastic polyamide-based elastomer, the (unsaturated) compound having an acid group is preferably a compound having a carboxylic acid group, that is a weak acid group, and examples that may be employed therefor include acrylic acid, methacrylic acid, itaconic acid, crotonic acid, isocrotonic acid, and maleic acid.

Examples of the acid-modified thermoplastic polystyrene-based elastomer include TUFTEC such as M1943, M 1911, or M 1913 manufactured by Asahi Kasei Corporation, and FG19181G manufactured by Kraton Inc.

The acid value of the acid-modified thermoplastic polystyrene-based elastomer is preferably more than 0 mg ($CH_3ONa$)/g and 20 mg ($CH_3ONa$)/g or less, more preferably more than 0 mg ($CH_3ONa$)/g and 17 mg ($CH_3ONa$)/g or less, and particularly preferably more than 0 mg ($CH_3ONa$)/g and 15 mg ($CH_3ONa$)/g or less.

Thermoplastic Polyurethane-based Elastomer

Examples of the thermoplastic polyurethane-based elastomer include materials with at least a polyurethane forming the hard segment that forms pseudo-crosslinks by physical aggregation, and another polymer that forms a soft segment that is amorphous and has a low glass transition temperature.

The thermoplastic polyurethane-based elastomer is also referred to as simply ThermoPlastic Urethan elastomer ("TPU").

A specific example of the thermoplastic polyurethane-based elastomer may be represented by, a copolymer including a soft segment including the unit structure represented by the following Structural Unit (U-1) and a hard segment including the unit structure represented by the following Structural Unit (U-2).

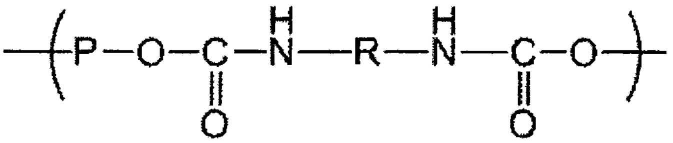

(U-1)

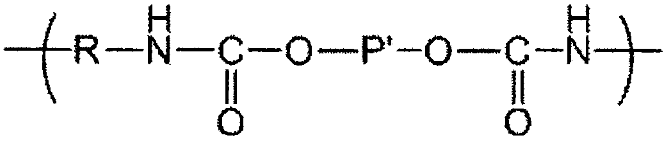

(U-2)

In the Structural Unit (U-1) and the Structural Unit (U-2), P represents a long-chain aliphatic polyether, or a long-chain aliphatic polyester. R represents an aliphatic hydrocarbon, an alicyclic hydrocarbon, or an aromatic hydrocarbon. P' represents a short-chain aliphatic hydrocarbon, an alicyclic hydrocarbon, or an aromatic hydrocarbon.

In the Structural Unit (U-1), a species with a molecular weight of from 500 to 5000, for example, may be employed as the long-chain aliphatic polyether or the long-chain aliphatic polyester represented by the P. The P is derived from a diol compound including the long-chain aliphatic polyether or the long-chain aliphatic polyester represented by the P. Examples of such diol compounds include polyethylene glycols, polypropylene glycols, polytetramethylene ether glycols, poly(butylene adipate) diols, poly-ε-caprolactone diols, poly(hexamethylene carbonate) diols, and the ABA-type triblock polyethers (polyethers represented by Formula (3) above), within the molecular weight range described above.

These compounds may be employed singly, or in a combination of two or more thereof.

In Structural Unit (U-1) and Structural Unit (U-2), the R is derived from a diisocyanate compound including the aliphatic hydrocarbon, the alicyclic hydrocarbon, or the aromatic hydrocarbon represented by the R. Examples of aliphatic diisocyanate compounds including the aliphatic hydrocarbon represented by the R include 1,2-ethylene diisocyanate, 1,3-propylene diisocyanate, 1,4-butane diisocyanate, and 1,6-hexamethylene diisocyanate.

Moreover, examples of diisocyanate compounds including the alicyclic hydrocarbon represented by the R include 1,4-cyclohexane diisocyanate, or 4,4-cyclohexane diisocyanate. Moreover, examples of aromatic diisocyanate compounds including the aromatic hydrocarbon represented by the R include 4,4'-diphenylmethane diisocyanate, or tolylene diisocyanate.

These compounds may be employed singly, or in a combination of two or more thereof.

In the Structural Unit (U-2), a species with a molecular weight of less than 500, for example, may be employed as a short-chain aliphatic hydrocarbon, alicyclic hydrocarbon, or aromatic hydrocarbon represented by P'. Moreover, the P' is derived from a diol compound including the short-chain aliphatic hydrocarbon, alicyclic hydrocarbon, or aromatic hydrocarbon represented by the P'. Examples of aliphatic diol compounds including the short-chain aliphatic hydrocarbon represented by the P' include glycols and polyalkylene glycols, with examples thereof including ethylene glycol, propylene glycol, trimethylene glycol, 1,4-butanediol, 1,3-butanediol, 1,5-pentanediol, 1,6-hexanediol, 1,7-heptanediol, 1,8-octanediol, 1,9-nonanediol, and 1,10-decanediol.

Moreover, examples of alicyclic diol compounds including the alicyclic hydrocarbon represented by the P' include cyclopentane-1,2-diol, cyclohexane-1,2-diol, cyclohexane-1,3-diol, cyclohexane-1,4-diol, and cyclohexane-1,4-dimethanol.

Furthermore, examples of aromatic diol compounds including the aromatic hydrocarbon represented by the P' include hydroquinone, resorcinol, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenylether, 4,4'-dihydroxydiphenylsulfide, 4,4'-dihydroxydiphenylsulfone, 4,4'-dihydroxybenzophenone, 4,4'-dihydroxydiphenylmethane, bisphenol A, 1,1-di(4-hydroxyphenyl)cyclohexane, 1,2-bis(4-hydroxyphenoxy)ethane, 1,4-dihydroxynaphthalene, and 2,6-dihydroxynaphthalene.

These compounds may be employed singly, or in a combination of two or more thereof.

From the viewpoint of melt-molding property, the number average molecular weight of the polymer (polyurethane) forming the hard segment is preferably from 300 to 1500. Moreover, from the viewpoints of flexibility and thermal stability of the thermoplastic polyurethane-based elastomer, the number average molecular weight of the polymer forming the soft segment is preferably from 500 to 20000, more preferably from 500 to 5000, and particularly preferably from 500 to 3000. Moreover, from the viewpoint of formability, the mass ratio (x:y) of the hard segment (x) to the soft segment (y) is preferably from 15:85 to 90:10, and more preferably from 30:70 to 90:10.

The thermoplastic polyurethane-based elastomer may be synthesized by, using a known method, subjecting a polymer forming the hard segment and a polymer forming the soft segment described above to copolymerization. The thermoplastic polyurethane described in JP-A H05-331256, for example, may be employed as the thermoplastic polyurethane-based elastomer.

Specifically, the thermoplastic polyurethane-based elastomer is preferably a combination of a hard segment consisting of an aromatic diol and an aromatic diisocyanate, and a soft segment consisting of a polycarbonate ester, with a tolylene diisocyanate (TDI)/polyester-based polyol copolymer, a TDI/polyether-based polyol copolymer, a TDI/caprolactone-based polyol copolymer, a TDI/polycarbonate-based polyol copolymer, a 4,4'-diphenylmethane diisocyanate (MDI)/polyester-based polyol copolymer, an MDI/polyether-based polyol copolymer, an MDI/caprolactone-based polyol copolymer, an MDI/polycarbonate-based polyol copolymer, or an MDI + hydroquinone/polyhexamethylene carbonate copolymer being preferable, and a TDI/polyester-based polyol copolymer, a TDI/polyether-based polyol copolymer, an MDI/polyester polyol copolymer, an MDI/polyether-based polyol copolymer, or an MDI + hydroquinone /polyhexamethylene carbonate copolymer being more preferable.

Moreover, examples of commercial products that may be employed as the thermoplastic polyurethane-based elastomer include the "ELASTOLLAN" series (examples include ET680, ET880, ET690, and ET890) manufactured by BASF SE, the "KURAMIRON U" series (for example, 2000 series, 3000 series, 8000 series, and 9000 series) manufactured by Kuraray Co., Ltd., and the "MIRACTRAN" series (for example, XN-2001, XN-2004, P390RSUP, P480RSUI, P26MRNAT, E490, E590, and P890) manufactured by Nippon Miractran Co., Ltd.

The above thermoplastic elastomers may be synthesized by, using a known method, subjecting a polymer forming the hard segment and a polymer forming the soft segment described above to copolymerization.

Explanation follows regarding various non-elastomer thermoplastic resins.

Non-elastomer Thermoplastic Polyolefin-based Resin

A non-elastomer polyolefin-based resin is a polyolefin-based resin with a higher elastic modulus than the thermoplastic polyolefin-based elastomers described above.

Examples of the non-elastomer thermoplastic polyolefin-based resin include homopolymers, random copolymers, and block copolymers of $\alpha$-olefins such as propylene, or ethylene, and of annular olefins such as cycloolefins. Specific examples thereof include thermoplastic polyethylene-based resins, thermoplastic polypropylene-based resins, and thermoplastic polybutadiene-based resins, with thermoplastic polypropylene-based resins in particular being preferable from the viewpoints of heat resistance and processability.

Specific examples of the non-elastomer thermoplastic polypropylene-based resin include propylene homopolymers, propylene-$\alpha$-olefin random copolymers, and propylene-$\alpha$-olefin block copolymers. Examples of the $\alpha$-olefin therein include $\alpha$-olefins having approximately from 3 to 20 carbon atoms, such as propylene, 1-butene, 1-pentene, 3-methyl-1-butene, 1-hexene, 4-methyl-1-pentene, 3-methyl-1-pentene, 1-heptene, 1-octene, 1-decene, 1-dodecene, 1-tetradecene, 1-hexadecene, 1-octadecene, and 1-eicosene.

Note that the thermoplastic polyolefin-based resin may be a chlorinated polyolefin-based resin in which some or all of the hydrogen atoms in the molecule are substituted by chlorine atoms. Examples of the chlorinated polyolefin-based resin include chlorinated polyethylene-based resins.

Non-elastomer Thermoplastic Polystyrene-based Resin

The non-elastomer thermoplastic polystyrene-based resin is a thermoplastic polystyrene-based resin with a higher elastic modulus than the thermoplastic polystyrene-based elastomers described above.

A product obtained by, for example, a known radical polymerization method or ionic polymerization method is preferably used as the thermoplastic polystyrene-based resin, with examples thereof including polystyrene having an anionic living polymer form. Moreover, examples of the thermoplastic polystyrene-based resin include polymers including styrene molecular skeletons, and copolymers of styrene and acrylonitrile.

Of these, acrylonitrile/butadiene/styrene copolymers, hydrogenated products thereof, blends of acrylonitrile/styrene copolymers and polybutadiene, and hydrogenated products thereof are preferable. Specific examples of the thermoplastic polystyrene-based resin include polystyrenes (known as PS resins), acrylonitrile/styrene resins (known as AS

resins), acrylic-styrene-acrylonitrile resins (known as ASA resins), acrylonitrile/butadiene/styrene resins (known as ABS resins (including blended-forms and copolymer-forms)), hydrogenated products of ABS resins (known as AES resins), and acrylonitrile-chlorinated polyethylene-styrene copolymers (known as ACS resins).

As stated above, AS resins are acrylonitrile/styrene resins, and are copolymers with styrene and acrylonitrile as the main components, and these may be further copolymerized with, for example, aromatic vinyl compounds such as α-methylstyrene, vinyltoluene, or divinylbenzene, cyanated vinyl compounds such as dimethacrylonitrile, alkylesters of (meth)acrylic acid such as methyl methacrylate, ethyl methacrylate, n-butyl methacrylate, methyl acrylate, ethyl acrylate, n-butyl acrylate, or stearyl acrylate, maleimide-based monomers such as maleimide, N-methylmaleimide, N-ethylmaleimide, N-phenylmaleimide, or N-cyclohexylmaleimide, diene compounds, dialkylesters of maleic acid, allyl alkyl ethers, unsaturated amino compounds, and vinyl alkyl ethers.

Moreover, for the AS resin, products of further graft polymerizing or copolymerizing the AS resin with an unsaturated monocarboxylic acid, an unsaturated dicarboxylic acid, an unsaturated acid anhydride, or a vinyl-based monomer having an epoxy group are preferable, and products of further graft polymerizing or copolymerizing the AS resin with an unsaturated acid anhydride or a vinyl-based monomer having an epoxy group are more preferable.

Such vinyl-based monomers having an epoxy group are compounds having both a radical-polymerizable vinyl group and an epoxy group in a molecule thereof. Specific examples thereof include glycidyl esters of unsaturated organic acids such as glycidyl acrylate, glycidyl methacrylate, glycidyl ethacrylate, or glycidyl itaconate, glycidyl ethers such as allyl glycidyl ether, and derivatives of the above such as 2-methyl glycidyl methacrylate. Of these, glycidyl acrylate and glycidyl methacrylate may be preferably employed. Moreover, these compounds may be employed singly, or in a combination of two or more thereof.

Moreover, unsaturated acid anhydrides are compounds having both a radical-polymerizable vinyl group and an acid anhydride in a molecule thereof. Preferable specific examples thereof include maleic acid anhydride.

ASA resins are substances configured by acrylate monomers, styrene monomers, and acrylonitrile monomers, and that have rubbery properties and thermoplasticity.

Examples of the ABS resin include resins produced by graft polymerizing an olefin-based rubber (such as polybutadiene rubber) to an acrylonitrile-styrene-based resin at approximately 40% by mass or less. Moreover, examples of the AES resin include resins produced by graft polymerizing an ethylene-propylene copolymer rubber (such as EP rubber) to an acrylonitrile-styrene-based resin at approximately 40% by mass or less.

## Non-elastomer Thermoplastic Polyamide-based Resin

The non-elastomer polyamide-based resin is a polyamide-based resin with a higher elastic modulus than the thermoplastic polyamide-based elastomer described above.

Examples of the thermoplastic polyamide-based resin include polyamides that form the hard segment of the thermoplastic polyamide-based elastomers described above. Examples of the thermoplastic polyamide-based resin include polyamides (amide 6) that are ring-opened polycondensates of ε-caprolactam, polyamides (amide 11) that are ring-opened polycondensates of undecanolactam, polyamides (amide 12) that are ring-opened polycondensates of lauryl lactam, polyamides (amide 66) that are polycondensates of a diamine and a dibasic acid, and polyamides (amide MX) having meta-xylene diamine as a structural unit.

The amide 6 may be represented by, for example, $\{CO-(CH_2)_5-NH\}_n$ (where n represents the number of repeating units).

The amide 11 may be represented by, for example, $\{CO-(CH_2)_{10}-NH\}_n$ (where n represents the number of repeating units).

The amide 12 may be represented by, for example, $\{CO-(CH_2)_{11}-NH\}_n$ (where n represents the number of repeating units).

The amide 66 may be represented by, for example, $\{CO(CH_2)_4CONH(CH_2)_6NH\}_n$ (where n represents the number of repeating units).

Moreover, the amide MX having meta-xylene diamine as a structural unit may be represented by, for example, the structural unit (A-1) below (where n in (A-1) represents the number of repeating units).

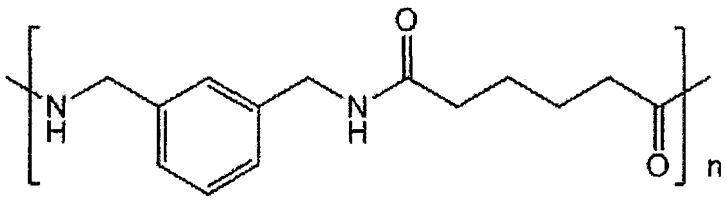

(A-1)

The thermoplastic polyamide-based resin may be a homopolymer configured by only the structural unit, or may be a copolymer of the structural unit (A-1) and another monomer. In the case of a copolymer, the content ratio of the structural unit (A-1) in each thermoplastic polyamide-based resin is preferably 60% by mass or above.

The number average molecular weight of the thermoplastic polyamide-based resin is preferably from 300 to 30000. Moreover, from the viewpoint of toughness and flexibility at low temperature, the number average molecular weight of the polymer forming the soft segment is preferably from 200 to 20000.

A commercial product may be employed as the non-elastomer polyamide-based resin.

As the amide 6, for example, a commercial product such as "UBE NYLON" 1022B or 1011FB, manufactured by Ube Industries, Ltd., may be used.

As the amide 12, an "UBE NYLON", for example, 3024U, manufactured by Ube Industries, Ltd., may be used. As the amide 66, "UBE NYLON 2020B", or the like, may be used. Moreover, as the amide MX, for example, a commercial product, such as MX NYLON (S6001, S6021, or S6011), manufactured by Mitsubishi Gas Chemical Company, Inc., may be used.

Non-elastomer Thermoplastic Polyester-based Resin

The non-elastomer polyester-based resin is a resin having ester bonds in the main chain thereof, with a higher elastic modulus than the thermoplastic polyester-based elastomers described above.

Although the thermoplastic polyester-based resin is not particularly limited, it is preferably the same type of resin as the thermoplastic polyester-based resin included in the hard segment in the thermoplastic polyester-based elastomers described above. Moreover, the non-elastomer polyester-based resin may be crystalline, or amorphous, and examples thereof include aliphatic-type polyesters, and aromatic polyesters. The aliphatic-type polyester may be a saturated aliphatic-based polyester, or an unsaturated aliphatic-type polyester.

Aromatic polyesters are generally crystalline, and may be formed by, for example, an aromatic dicarboxylic acid or an ester forming derivative thereof, and an aliphatic diol.

Examples of the aromatic polyester include polyethylene terephthalate, polybutylene terephthalate, polystyrene terephthalate, polyethylene naphthalate, and polybutylene naphthalate, with polybutylene terephthalate being preferable.

An example of the aromatic polyester is polybutylene terephthalate derived from terephthalic acid and/or dimethyl terephthalate and 1,4-butanediol. Moreover, the aromatic polyester may be a polyester derived from a dicarboxylic acid component such as isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or an ester-forming derivative thereof, and a diol with a molecular weight of 300 or less (for example: an aliphatic diol such as ethylene glycol, trimethylene glycol, pentamethylene glycol, hexamethylene glycol, neopentyl glycol, or decamethylene glycol; an alicyclic diol such as 1,4-cyclohexane dimethanol, or tricyclodecane dimethylol; or an aromatic diol such as xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-p-terphenyl, or 4,4'-dihydroxy-p-quaterphenyl), and may be a copolymer polyester that employs two or more of the above dicarboxylic acid components and diol components in combination. Copolymerization can also be made with a polyfunctional carboxylic acid component, a polyfunctional oxyacid component, a polyfunctional hydroxy component, or the like, having three or more functional groups, in a range of 5% by mol or less.

As such a non-elastomer thermoplastic polyester-based resin, a commercial product may be used, with examples including the "DURANEX" series (examples including 2000, and 2002), manufactured by Polyplastics Co., Ltd., the NOVADURAN series (examples include 5010R5, and 5010R3-2), manufactured by Mitsubishi Engineering-Plastics Corporation, and the "TORAYCON" series (examples include 1401X06, and 1401X31), manufactured by Toray Industries, Inc.

The aliphatic polyester may employ any out of a dicarboxylic acid/diol condensate, or a hydroxycarboxylic acid condensate. Examples thereof include polylactic acid, polyhydroxy-3-butylbutyrate, polyhydroxy-3-hexylbutyrate, poly(ε-caprolactone), polyenantholactone, polycaprylolactone, polybutylene adipate, and polyethylene adipate. Note that polylactic acid is a typical example of a resin used as a biodegradable plastic. Preferable embodiments of the polylactic acid form are described below.

Dynamically vulcanized Thermoplastic Elastomer

A dynamically vulcanized thermoplastic elastomer may be used as the resin material. Dynamically vulcanized thermoplastic elastomers are thermoplastic elastomers produced by mixing rubber with molten-state thermoplastic resin, adding a crosslinking agent to the mixture, and performing a crosslinking reaction of rubber components under the condition of kneading of the mixture.

The dynamically vulcanized thermoplastic elastomer is also sometimes simply referred to below as Thermo-

Plastic Vulcanizates Elastomer ("TPV").

Examples of thermoplastic resins that can be used in the manufacture of the TPV include the thermoplastic resins described above (thermoplastic elastomers included).

Examples of rubber components that can be used in the manufacture of the TPV include diene-based rubbers, and hydrogenated products thereof (for example, NR, IR, epoxied natural rubbers, SBR, BR (high-cis BR, and low-cis BR), NBR, hydrogenated NBR, and hydrogenated SBR), olefin-based rubbers (for example, an ethylene propylene rubber (EPDM, EPM), a maleic acid-modified ethylene propylene rubber (M-EPM), IIR, a copolymer of isobutylene and an aromatic vinyl, or a diene-based monomer, acrylic rubber (ACM), or an ionomer), halogen-containing rubbers (for example, Br-IIR, Cl-IIR, a brominated product of an isobutylene para-methylstyrene copolymer (Br-IPMS), chloroprene rubber (CR), hydrin rubber (CHR), chlorosulfonated polyethylene (CSM), chlorinated polyethylene (CM), or maleic acid-modified chlorinated polyethylene (M-CM)), silicone rubbers (for example, methyl vinyl silicone rubber, dimethyl silicone rubber, or methyl phenyl vinyl silicone rubber), sulfur-containing rubbers (for example, a polysulfide rubber), fluorine rubbers (for example, vinylidene fluoride-based rubbers, fluorine-containing vinylether-based rubbers, tetrafluoroethylene-propylene-based rubbers, fluorine-containing silicone-based rubbers, and fluorine-containing phosphazene-based rubbers); in particular, halogen-containing copolymer rubbers of isomonoolefins and p-alkylstyrenes such as isobutylene-isoprene copolymer rubbers with introduced halogen groups and/or isobutylene-paramethylstyrene copolymer rubbers with introduced halogen groups are effectively used as modified polyisobutylene-based rubber. "EXXPRO", manufactured by ExxonMobil, may be suitably employed as the latter.

Various additives such as a rubber, various fillers (for example, silica, calcium carbonate, and clay), an anti-aging agent, an oil, a plasticizer, a coloring agent, an anti-weathering agent, or a reinforcing material may be included in the resin material as desired. The content of the additives in the resin material (in the tire frame) is not particularly limited, and may be employed within a range that does not impair the effects of the invention. In cases in which components other than resin, such as additives, are added to the resin material, the content of resin components in the resin material is preferably 50% by mass or greater, and more preferably 90% by mass or greater, with respect to the total amount of resin material. The content of resin in the resin material is the remaining portion when the total amount of each additive is subtracted from the total amount of the resin components.

Physical Properties of the Resin Material

Explanation follows regarding preferable physical properties of the resin material forming the tire frame.

The melting point (or softening point) of the resin material (tire frame) itself is usually from 100°C to 350°C, is preferably from approximately 100°C to approximately 250°C, and from the viewpoint of manufacturability of the tire, is preferably from approximately 120°C°C to approximately 250°C, and is more preferably from 120°C to 200°C.

When, for example, a frame of a tire is formed by welding together divided parts (frame pieces), using a resin material with a melting point of from 120°C to 250°C in this manner achieves sufficiently strong bonding of the tire frame pieces together even for a frame welded in an ambient temperature range of from 120°C to 250°C. The tire of the invention accordingly has excellent durability during running, such as puncture resistance and abrasion resistance properties. The heating temperature is preferably a temperature that is from 10°C to 150°C higher, and is more preferably a temperature from 10°C to 100°C higher than the melting point (or softening point) of the resin material forming the tire frame pieces.

The resin material may be obtained by adding various additives if necessary, and mixing as appropriate using a known method (for example melt mixing).

A resin material obtained by melt mixing may be employed in a pellet form, if necessary.

The tensile elastic modulus of the resin material (tire frame) itself, as defined in JIS K7113:1995, is preferably from 100 MPa to 1000 MPa, is more preferably from 100 MPa to 800 MPa, and is particularly preferably from 100 MPa to 700 MPa. A tensile elastic modulus of the resin material of from 100 MPa to 700 MPa enables the tire frame to be efficiently fitted onto a rim while maintaining the shape of the tire frame.

The tensile yield strength of the resin material (tire frame) itself, as defined in JIS K7113:1995, is preferably 5 MPa or greater, is preferably from 5 MPa to 20 MPa, and is more preferably from 5 MPa to 17 MPa. A tensile yield strength of the resin material of 5 MPa or greater enables deformation to be withstood under load on the tire, such as during running.

The tensile yield elongation of the resin material (tire frame) itself, as defined in JIS K7113:1995, is preferably 10% or greater, is preferably from 10% to 70%, and is more preferably from 15% to 60%. A tensile yield elongation of the resin material of 10% or greater enables a large elastic region and good fittability onto a rim.

The tensile elongation at break of the resin material (tire frame) itself, as defined in JIS K7113:1995, is preferably 50% or greater, is preferably 100% or greater, is more preferably 150% or greater, and is particularly preferably 200% or greater. A tensile elongation at break of the resin material of 50% or greater enables good fittability onto a rim, and reduces the susceptibility to damage on impact.

The deflection temperature under load of the resin material (tire frame) itself, as defined in ISO75-2 or ASTM D648 (at a load of 0.45 MPa) is preferably 50°C or greater, is preferably from 50°C to 150°C, and is more preferably from 50°C to 130°C. A deflection temperature under load of the resin material of 50°C or greater enables deformation of the tire frame to be suppressed even in cases in which vulcanization is performed during tire manufacture.

First Embodiment

Explanation next follows regarding a tire according to a first embodiment of the tire of the invention, with reference to the drawings.

Explanation follows regarding a tire 10 of the present embodiment. Fig. 1A is a perspective view illustrating a cross-section of a portion of the tire according to an embodiment of the invention. Fig. 1B is a cross-section of a bead portion fitted to a rim. As illustrated in Fig. 1, the tire 10 of the present embodiment exhibits a cross-section profile that is substantially the same as an ordinary conventional rubber-made pneumatic tire.

As illustrated in Fig. 1A, the tire 10 is equipped with a tire case 17 configured including a pair of bead portions 12 that each make contact with a bead seat 21 and a rim flange 22 of the rim 20 illustrated in Fig. 1B, side portions 14 that respectively extend from the bead portions 12 toward the tire radial direction outside, and a crown portion 16 (outer circumference) that connects together the tire radial direction outside end of one side portion 14 and the tire radial direction outside end of the other side portion 14.

The tire case 17 of the present embodiment is formed using a resin material including a single thermoplastic polyester-based resin (for example "HYTREL 4767", manufactured by Du Pont-Toray Co., Ltd.) as the resin material. In this case, the tire case 17 (the resin material) has a single loss coefficient (tan $\delta$) peak temperature of approximately -41 °C.

The tire case 17 of the present embodiment is formed with a single resin material (a thermoplastic polyester-based resin); however, the configuration of the invention is not limited thereto, and similarly to ordinary conventional rubber-made pneumatic tires, thermoplastic resin materials with different characteristics may be employed for each of the sections of the tire case 17 (such as the side portions 14, the crown portion 16 and the bead portions 12). The tire case 17 may be reinforced by a reinforcing material by embedding the reinforcing material (such as fibers, cord, nonwoven fabric, or cloth of a polymer material or metal) in the tire case 17 (for example, in the bead portions 12, the side portions 14, the crown portion 16, and the like).

In the tire case 17 of the present embodiment, a pair of tire case half parts (tire frame pieces) 17A formed of the resin material are bonded together. The tire case half parts 17A are each formed as a single body of one the bead portion 12, one of the side portions 14, and half the width of the crown portion 16, by injection molding or the like, to give tire case half parts 17A of the same annular shape, that are then aligned facing each other and bonded together at tire equatorial plane portions. Note that the tire case 17 is not limited to being formed by bonding two members, and may be formed by bonding three or more members.

The tire case half parts 17A formed with the resin material may, for example, be molded by vacuum molding, pressure molding, injection molding, melt casting, or the like. The need to perform vulcanization is therefore eliminated in contrast to conventional cases in which a tire case is formed of rubber, enabling manufacturing processes to be greatly simplified, and enabling molding time to be reduced.

In the present embodiment, the tire case half parts 17A are formed in left-right symmetrical shapes, namely one of the tire case half parts 17A is formed in the same shape as the other of the tire case half parts 17A, with the advantage that one type of mold suffices for molding the tire case half parts 17A.

In the present embodiment, as illustrated in Fig. 1B, an annular bead core 18, formed of steel cord, is embedded in the bead portion 12, similarly to in ordinary conventional pneumatic tires. However, the invention is not limited to such a configuration, and the bead core 18 may be omitted as long as the rigidity of the bead portion 12 is secured, and there are no issues with fitting onto the rim 20. Other than steel cord, the bead core 18 may also be formed of, for example, organic fiber cord, organic fiber cord covered with a resin, or a hard resin.

In the present embodiment, an annular seal layer 24 formed of a material with more excellent sealing properties than the resin material forming the tire case 17, for example rubber, is formed at portions of the bead portions 12 that contact the rim 20, and at least at portions that contact the rim flanges 22 of the rim 20. The seal layer 24 may also be formed to portions where the tire case 17 (the bead portion 12) and the bead seat 21 contact each other. A softer material than the resin material forming the tire case 17 may be employed as the material with more excellent sealing properties than the resin material forming the tire case 17. As a rubber capable of being employed as the seal layer 24, preferably the same type of rubber is employed as the rubber employed on bead portion external faces of ordinary conventional rubber-made pneumatic tires. The rubber seal layer 24 may also be omitted as long as sealing properties with the rim 20 can be secured with the resin material forming the tire case 17 alone, or another thermoplastic resin (thermoplastic elastomer) with more excellent sealing properties than the resin material may also be employed. Examples of such other thermoplastic resins include resins such as polyurethane-based resins, polyolefin-based resins, thermoplastic polystyrene-based resins, and polyester resins, and blends of these resins and a rubber or elastomer, or the like. A thermoplastic elastomer may also be employed, and examples include thermoplastic polyester-based elastomers, thermoplastic polyurethane-based elastomers, thermoplastic polystyrene-based elastomers, thermoplastic polyolefin-based elastomers, combinations of such elastomers with each other, and blends of such elastomers with rubber.

As illustrated in Fig. 1A, a reinforcing cord 26 having higher rigidity than the resin material forming the tire case 17 is wound onto the crown portion 16 in the tire case 17 circumferential direction. The reinforcing cord 26 is wound in a spiral shape, such that at least a portion thereof is in an embedded state in the crown portion 16 in cross-section taken along the tire case 17 axial direction, to form a reinforcing cord layer 28. A tread 30, formed of a material, for example rubber, having more excellent abrasion resistance than the resin material forming the tire case 17 is disposed to the tire radial direction outer circumferential side of the reinforcing cord layer 28.

Explanation next follows regarding the reinforcing cord layer 28 formed by the reinforcing cord 26, with reference to Fig. 2. Fig. 2 is a cross-section taken along the tire rotation axis and illustrating a state in which the reinforcing cord is embedded in the crown portion of the tire case of the tire of the first embodiment. As illustrated in Fig. 2, the reinforcing cord 26 is wound in a spiral shape, such that at least a portion thereof is embedded in the crown portion 16 in cross-section taken along the tire case 17 axial direction, so as to form the reinforcing cord layer 28, illustrated, together with a portion of the outer circumference of the tire case 17, by the intermittent line portion in Fig. 2. The portion of the reinforcing cord 26 embedded in the crown portion 16 is in a close contact state with the resin material forming the crown portion 16 (the tire case 17). As the reinforcing cord 26, a monofilament (single strand) such as of metal fiber or organic fiber, or a multifilament (twisted strands) formed of twisted fibers such as a steel cord formed of twisted steel fiber, or the like may be employed. In the present embodiment, a steel cord is employed as the reinforcing cord 26.

The depth L of embedding in Fig. 2 illustrates a depth of embedding of the reinforcing cord 26 with respect to the tire case 17 (the crown portion 16) along the tire rotation axis direction. The depth L of embedding of the reinforcing cord 26 with respect to the crown portion 16 is preferably 1/5 of the diameter D of the reinforcing cord 26, or greater, and more preferably exceeds 1/2 thereof. It is most preferable for the whole of the reinforcing cord 26 to be embedded in the crown portion 16. From a dimensional perspective of the reinforcing cord 26, if the depth L of embedding of the reinforcing cord 26 exceeds 1/2 the diameter D of the reinforcing cord 26 it is difficult for the reinforcing cord 26 to come away from the embedded portion. Embedding the whole of the reinforcing cord 26 in the crown portion 16 gives a flat surface (outer circumferential surface), and enables air to be suppressed from being incorporated at a reinforcing cord circumferential portion even when a member is placed on the crown portion 16 embedded with the reinforcing cord 26. The reinforcing cord layer 28 corresponds to a belt disposed on the outer circumferential surface of a carcass of a conventional rubber-made pneumatic tire.

As described above, the tread 30 is disposed at the tire radial direction outer circumferential side of the reinforcing cord layer 28. The rubber employed in the tread 30 is preferably the same type of rubber to the rubber employed in a conventional rubber-made pneumatic tire. Note that in place of the tread 30, a tread formed of another type of resin material with more excellent abrasion resistance than the resin material forming the tire case 17 may be employed. A tread pattern of plural grooves is formed in the road surface contact face of the tread 30, similarly to in a conventional rubber-made pneumatic tire.

Explanation follows regarding a manufacturing method of a tire according to the present embodiment.

Tire Case Molding Process

First, tire case half parts supported by a thin metal support ring are aligned facing each other. Then placement is made in a jointing mold, not illustrated in the drawings, such that outer circumferential surfaces of the abutting portions of the tire case half parts make contact. The jointing mold is configured to press the periphery of the bonding section (the abutting portion) of the tire case half parts A with a specific pressure. Then the periphery of the bonding section of the tire case half parts is pressed at the melting point (or softening point) of the resin material forming the tire case or higher. The bonding section of the tire case half parts is heated and pressed by the jointing mold, melting the bonding section, welding the tire case half parts together, and forming these members into a single body of the tire case 17. Note that although in the present embodiment the bonding section of the tire case half parts is heated by using the jointing mold, the invention is not limited thereto, and, for example, the bonding sections may be heated by a separately provided high frequency heater, or the like, or may be pre-softened or melted by using hot air, irradiation with infrared radiation, or the like, and then pressed by the jointing mold. The tire case half parts may thus be bonded together.

Reinforcing Cord Member Winding Process

Explanation next follows regarding a reinforcing cord winding process, with reference to Fig. 3. Fig. 3 is an explanatory diagram to explain an operation to embed the reinforcing cord in the crown portion of a tire case, using a cord heating device and rollers.

In Fig. 3, a cord feeding apparatus 56 is equipped with: a reel 58 wound with reinforcing cord 26; a cord heating device 59 disposed at the cord conveying direction downstream side of the reel 58; a first roller 60 disposed at the reinforcing cord 26 conveying direction downstream side; a first cylinder device 62 to move the first roller 60 in a direction towards, or away from, the tire outer circumferential surface; a second roller 64 disposed at the reinforcing cord 26 conveying direction downstream side of the first roller 60; and a second cylinder device 66 to move the second roller 64 in a direction towards, or away from, the tire outer circumferential surface. The second roller 64 may be employed as a cooling roller made of metal. In the present embodiment, the surface of the first roller 60 or the second roller 64 is coated with a fluorine resin (TEFLON (registered trademark) in the present embodiment) to suppress adhesion of the melted or softened resin material. Note that in the present embodiment, the cord feeding apparatus 56 is configured with the two rollers, the first roller 60 or the second roller 64; however, the invention is not limited to such a configuration, and may be configured with one of the rollers alone (namely, a single roller).

The cord heating device 59 is equipped with a heater 70 and a fan 72 for generating hot air. The cord heating device 59 is also equipped with a heating box 74 that is supplied inside with hot air and through an interior space of which the reinforcing cord 26 passes, and a discharge outlet 76 that dispenses the heated reinforcing cord 26.

In the present process, first, the temperature of the heater 70 is raised in the cord heating device 59, and the surrounding air heated by the heater 70 is formed into an airflow by rotation of the fan 72 and delivered into the heating box 74. The reinforcing cord 26 unwound from the reel 58 is then fed into the heating box 74, of which the internal space has been heated by the hot airflow, and heated (for example, the temperature of the reinforcing cord 26 is heated to approximately 100°C to 200°C). The heated reinforcing cord 26 passes through the discharge outlet 76, and is wound under a constant tension in a spiral shape on the outer circumferential surface of the crown portion 16 of the tire case 17 rotating in the arrow R direction in Fig. 3. When the heated reinforcing cord 26 contacts the outer circumferential surface of the crown portion 16, the resin material of the contact portion melts or softens, and at least a portion of the heated reinforcing cord 26 is embedded in the outer circumferential surface of the crown portion 16. When this is performed, due to the heated reinforcing cord 26 being embedded in the melted or softened resin material, a state is achieved in which there are no gaps between the resin material and the reinforcing cord 26, namely a close contact state. Incorporation of air into the portion where the reinforcing cord 26 is embedded is thereby suppressed. Heating the reinforcing cord 26 to a higher temperature than the melting point (or softening point) of the resin material forming the tire case 17 promotes melting or softening of the resin material at the portion contacted by the reinforcing cord 26. This thereby enables the reinforcing cord 26 to be readily embedded in the outer circumferential surface of the crown portion 16, and enables the incorporation of air to be effectively suppressed.

The depth L of embedding of the reinforcing cord 26 can be adjusted using the heating temperature of the reinforcing cord 26, the tension acting on the reinforcing cord 26, the pressure of the first roller 60, and the like. In the present embodiment, the depth L of embedding of the reinforcing cord 26 is set to be 1/5 of the diameter D of the reinforcing cord 26 or greater. The depth L of embedding of the reinforcing cord 26 more preferably exceeds 1/2 the diameter D of the reinforcing cord 26, and most preferably the whole of the reinforcing cord 26 is embedded.

The reinforcing cord layer 28 is thus formed at the outer circumferential side of the crown portion 16 of the tire case 17 by winding the heated reinforcing cord 26, while embedding it in the outer circumferential surface of the crown portion 16.

Then the vulcanized, belt-shaped, tread 30 is wound a single turn around the outer circumferential surface of the tire case 17, and the tread 30 is bonded to the outer circumferential surface of the tire case 17, with an adhesive or the like. Note that the tread 30 may, for example, employ a pre-cured tread employed in conventional known recycled tires. The present process is similar to the process for bonding a pre-cured tread to the outer circumferential surface of a casing of a recycled tire.

Bonding the seal layers 24, formed of a vulcanized rubber, to the bead portions 12 of the tire case 17 with an adhesive or the like thereby completes the tire 10.

Effects

In the tire 10 of the present embodiment, the tire case 17 is formed from a resin material including a thermoplastic polyester-based resin with a loss coefficient (tan $\delta$) peak temperature of -41°C, enabling excellent impact resistance to be exhibited at low temperatures, without becoming brittle at low temperatures. The tire 10 is moreover capable of suppressing whitening of the tire 10 surface due to impact. The tire 10 has a simpler structure than that of a conventional rubber-made tire, and is hence lighter in weight. The tire 10 of the present embodiment accordingly has high antifriction properties and durability.

In the tire 10 of the present embodiment, the puncture resistance performance, cut resistance performance, and the circumferential direction rigidity of the tire 10 are improved due to winding the reinforcing cord 26, that has a higher rigidity than the resin material, onto the outer circumferential surface of the crown portion 16 of the tire case 17 formed of the resin material, so as to give a spiral shape around the circumferential direction. Raising the circumferential

direction rigidity of the tire 10 prevents creep of the tire case 17 formed of the resin material.

Due to at least a portion of the reinforcing cord 26 being embedded in and in close contact with the resin material in the outer circumferential surface of the crown portion 16 of the resin material-formed tire case 17 in a cross-section taken along the axial direction of the tire case 17 (the cross-section illustrated in Fig. 1), incorporation of air during manufacture is suppressed, and the reinforcing cord 26 is suppressed from moving under force input during running, or the like. Separation or the like of the reinforcing cord 26, the tire case 17, and the tread 30 is thereby suppressed from occurring, improving the durability of the tire 10.

Due to thus enabling the difference in hardness between the tire case 17 and the reinforcing cord layer 28 to be reduced by including a resin material in the reinforcing cord layer 28, compared to cases in which the reinforcing cord 26 is fixed to the tire case 17 by cushion rubber, the reinforcing cord 26 can be placed in closer contact and better fixed to the tire case 17. This thereby enables the incorporation of air described above to be effectively prevented, enabling movement of the reinforcing cord member during running to be effectively suppressed.

Moreover, cases in which the reinforcing cord 26 is configured by steel cord enable easy separation and recovery of the reinforcing cord 26 from the resin material by heating when disposing of the tire, with this being advantageous from the perspective of recycling characteristics of the tire 10. The loss coefficient (tan $\delta$) of resin material is also lower than that of vulcanized rubber, enabling the tire rolling characteristics to be improved when the reinforcing cord layer 28 includes a lot of resin material. Moreover, the in-plane shear stiffness of resin material is larger than that of vulcanized rubber, with the advantages of excellent steering stability and abrasion resistance during tire running.

As illustrated in Fig. 2, the depth L of embedding of the reinforcing cord 26 is 1/5 of the diameter D or greater, and so the incorporation of air during manufacture is effectively suppressed, further suppressing the reinforcing cord 26 from moving under force input during running, or the like.

The tread 30 that contacts the road surface is configured from a rubber material that has greater abrasion resistance than the resin material forming the tire case 17, accordingly improving the abrasion resistance of the tire 10.

Moreover, the annular bead cores 18 formed of a metal material are embedded in the bead portions 12, and so similarly to with a conventional rubber-made pneumatic tire, the tire case 17, namely the tire 10, is firmly retained on the rim 20.

Moreover, the seal layer 24, formed of a rubber material with better sealing properties than the resin material forming the tire case 17, is provided at the portions of the bead portions 12 that contact the rim 20, and so the sealing properties between the tire 10 and the rim 20 are improved. The leakage of air from inside the tire is accordingly even further suppressed than in cases in which a seal is made between the rim 20 and the resin material forming the tire case 17 alone. The fittability onto a rim is also improved by providing the seal layer 24.

The above embodiment is configured by heating the reinforcing cord 26, with the surface of the tire case 17 melting or softening at the portions where the heated reinforcing cord 26 makes contact; however, the invention is not limited to such a configuration, and the reinforcing cord 26 may be embedded in the crown portion 16 after heating, by using a hot airflow generation device, the outer circumferential surface of the crown portion 16 where the reinforcing cord 26 is to be embedded, without heating the reinforcing cord 26.

In the first embodiment, the heat source of the cord heating device 59 is a heater and a fan; however, the invention is not limited to such a configuration, and configuration may be made to directly heat the reinforcing cord 26 with radiation heat (such as, for example, by infrared radiation).

The first embodiment is configured such that the melted or softened portion of the resin material where the reinforcing cord 26 is embedded is force-cooled with the metal second roller 64; however, the invention is not limited to such a configuration, and configuration may be made such that a cooling airflow is blown directly onto the melted or softened portion of the resin material, thereby force-cooling and solidifying the melted or softened portion of the resin material.

The first embodiment is configured such that the reinforcing cord 26 is heated; however, for example, configuration may be made such that the outer periphery of the reinforcing cord 26 is covered in a resin material that is the same as that of the tire case 17. In such cases, by heating the reinforcing cord 26 together with the covering resin material when winding the covered reinforcing cord onto the crown portion 16 of the tire case 17, incorporation of air during embedding in the crown portion 16 can be effectively suppressed.

Winding the reinforcing cord 26 in a spiral shape facilitates manufacture; however, other methods, such as reinforcing cord 26 that is discontinuous in the width direction may also be considered.

In the tire 10 of the first embodiment, the bead portions 12 are fitted to the rim 20 so as to form an air chamber between the tire 10 and the rim 20, in what is referred to as a tubeless tire; however, the invention is not limited to such a configuration, and may be formed into a complete tube shape.

Second Embodiment

Explanation next follows regarding a second embodiment of a manufacturing method of a tire and tire of the

invention, with reference to the drawings. The tire of the present embodiment, similarly to the first embodiment described above, exhibits a cross-section profile that is substantially the same as that of an ordinary conventional rubber-made pneumatic tire. Thus in the following drawings, the same reference numerals are appended to configuration the same as that of the first embodiment. Fig. 4A is a cross-section taken along the tire width direction of the tire of the second embodiment, and Fig. 4B is an enlarged cross-section taken along the tire width direction of a bead portion of a tire of the second embodiment, in a state fitted to a rim. Fig. 5 is a cross-section taken along the tire width direction and illustrates the periphery of a reinforcing layer of a tire according to the second embodiment.

Similarly to in the first embodiment, in the tire of the second embodiment the tire case 17 is formed using a resin material including thermoplastic polyamide-based resin (for example UBESTA XPA9040X1, manufactured by Ube Industries, Ltd.). In this case, the tire case 17 (the resin material) has a single loss coefficient (tan $\delta$) peak temperature of approximately -41°C.

In a tire 200 of the present embodiment, as illustrated in Fig. 4 and Fig. 5, a reinforcing cord layer 28 (illustrated by the intermittent line in Fig. 5) in which a covered cord member 26B is wound onto the crown portion 16 around the circumferential direction is present as a layer. The reinforcing cord layer 28 forms the outer circumference of the tire case 17, and reinforces the circumferential direction rigidity of the crown portion 16. The outer circumferential surface of the reinforcing cord layer 28 is contained in an outer circumferential surface 17S of the tire case 17.

The covered cord member 26B is formed with a covering resin material 27 that is a separate body to the resin material forming the tire case 17 covering a cord member 26A with higher rigidity than the resin material forming the tire case 17. The covered cord member 26B and the crown portion 16 are bonded (for example by welding or by bonding with an adhesive) at a contacting portion between the covered cord member 26B and the crown portion 16.

The tensile elastic modulus of the covering resin material 27 is preferably set to be within a range of from 0.1 times to 20 times the tensile elastic modulus of the resin material forming the tire case 17. In cases in which the tensile elastic modulus of the covering resin material 27 is 20 times the tensile elastic modulus of the resin material forming the tire case 17 or lower, the crown portion is not too hard, and good fittability onto a rim is achieved. In cases in which the tensile elastic modulus of the covering resin material 27 is 0.1 times the tensile elastic modulus of the resin material forming the tire case 17 or greater, the resin forming the reinforcing cord layer 28 is not too soft, the in-plane shear stiffness of the belt is excellent, and cornering force is improved. In the present embodiment, a similar material to the resin material forming the tire frame is employed as the covering resin material 27.

As illustrated in Fig. 5, the covered cord member 26B is formed with a substantially trapezoidal-shaped cross-section profile. In the following, the reference numeral 26U indicates the top face (the face on the tire radial direction outside), and the reference numeral 26D indicates the bottom face (the face on the tire radial direction inside) of the covered cord member 26B. In the present embodiment, the cross-section profile of the covered cord member 26B is configured as a substantially trapezoidal-shaped cross-section profile; however, the invention is not limited thereto, and any shape may be employed other than a shape in which the width of the cross-section profile increases on progression from the bottom face 26D side (the tire radial direction inside) toward the top face 26U side (the tire radial direction outside).

As illustrated in Fig. 5, the covered cord members 26B are disposed at intervals, running in the circumferential direction, forming gaps 28A between adjacent covered cord members 26B. The outer circumferential surface of the reinforcing cord layer 28 is accordingly corrugated, and the outer circumferential surface 17S of the tire case 17, forming the outer circumferential portion of the reinforcing cord layer 28, is also corrugated.

Fine roughened undulations are uniformly formed to the outer circumferential surface 17S of the tire case 17 (including the corrugations), and a cushion rubber 29 is bonded thereon with an adhesive. The rubber portion at the radial direction inside of the cushion rubber 29 flows into the roughened undulations.

A material with more excellent abrasion resistance than the resin material forming the tire case 17, for example the tread 30 formed of rubber, is bonded onto (the outer circumferential surface of) the cushion rubber 29.

For the rubber (tread rubber 30A) employed in the tread 30, preferably the same type of rubber is employed to that employed in conventional rubber-made pneumatic tires. In place of the tread 30, a tread formed of another type of resin material having more excellent abrasion resistance than the resin material forming the tire case 17 may be employed. A tread pattern (not illustrated in the drawings) having plural grooves is formed in the road surface contact face of the tread 30, similarly to in a conventional rubber-made pneumatic tire.

Explanation next follows regarding a manufacturing method of a tire of the present embodiment.

Tire Case Molding Process

First, similarly to in the first embodiment described above, the tire case half parts 17A are formed, and the tire case 17 is then formed by heating and pressing these with a jointing mold.

Reinforcing Cord Member Winding Process

Manufacturing equipment for the tire of the present embodiment is similar to that of the first embodiment described above, with the substantially trapezoidal cross-section shaped covered cord member 26B configured by the cord member 26A covered by the covering resin material 27 (the same resin material as that of the tire case in the present embodiment) wound on the reel 58 in the cord feeding apparatus 56 illustrated in Fig. 3 of the first embodiment.

First, the temperature of the heater 70 is raised, and the surrounding air heated by the heater 70 is formed into an airflow by rotation of the fan 72 and delivered into the heating box 74. The covered cord member 26B unwound from the reel 58 is then fed into the heating box 74 of which the internal space has been heated by the hot airflow, and heated (for example, the temperature of the outer circumferential surface of the covered cord member 26B is heated to the melting point (or softening point) of the covering resin material 27 or above). The covering resin material 27 is rendered into a melted or softened state by heating the covered cord member 26B.

The covered cord member 26B passes through the discharge outlet 76, and is wound in a spiral shape at a constant tension onto the outer circumferential surface of the crown portion 16 of the tire case 17, rotating in the direction towards the nearside of the page. On doing so, the bottom face 26D of the covered cord member 26B contacts the outer circumferential surface of the crown portion 16. The covering resin material 27 in the melted or softened state at the portion making contact then spreads out over the outer circumferential surface of the crown portion 16, and the covered cord member 26B is welded to the outer circumferential surface of the crown portion 16. The bond strength between the crown portion 16 and the covered cord member 26B is thereby raised.

Roughening Treatment Process

Then, using a blasting apparatus, not illustrated in the drawings, projectile material is ejected at high speed at the outer circumferential surface 17S, toward the outer circumferential surface 17S of the tire case 17, while rotating the tire case 17 side. The ejected projectile material impacts the outer circumferential surface 17S, and forms finely roughened undulations 96 with an arithmetic roughness average Ra of 0.05 mm or above on the outer circumferential surface 17S.

Due to forming the finely roughened undulations 96 on the outer circumferential surface 17S of the tire case 17 in this manner, the outer circumferential surface 17S becomes hydrophilic, raising the wetting properties of the adhesive, described below.

Layering Process

Then an adhesive is coated onto the outer circumferential surface 17S of the tire case 17 that has been subject to roughening treatment.

As the adhesive, a triazinethiol-based adhesive, a chlorinated rubber-based adhesive, a phenol-based resin adhesive, an isocyanate-based adhesive, a halogenated rubber-based adhesive, a rubber-based adhesive or the like may be employed without particular limitation; however, the adhesive preferably reacts at a temperature capable of vulcanizing the cushion rubber 29 (from 90°C to 140°C).

One wrap of the non-vulcanized state cushion rubber 29 is then wrapped onto the outer circumferential surface 17S coated with the adhesive, and then an adhesive such as a rubber cement composition is coated onto the cushion rubber 29, and one wrap of the tread rubber 30A, in a vulcanized or semi-vulcanized state, is wrapped thereon to give a raw tire case state.

Vulcanization Process

The raw tire case is then housed in a vulcanization can or a mold, and vulcanized. At this time, the non-vulcanized cushion rubber 29 flows into the roughened undulations 96 formed to the outer circumferential surface 17S of the tire case 17 by the roughening processing. When vulcanization is complete, an anchor effect is exhibited by the cushion rubber 29 that has flowed into the roughened undulations 96, raising the bond strength between the tire case 17 and the cushion rubber 29. Namely, the bond strength between the tire case 17 and the tread 30 is raised through the cushion rubber 29.

The seal layer 24, formed of a soft material that is softer than the resin material, is bonded to the bead portions 12 of the tire case 17 using an adhesive or the like, thereby completing the tire 200.

Effects

In the tire 200 of the present embodiment, the tire case 17 is formed from a resin material including a thermoplastic polyamide-based resin with a loss coefficient (tan $\delta$) peak temperature of -41°C, enabling excellent impact resistance

to be exhibited at low temperatures, without becoming brittle at low temperatures. The tire 200 is moreover capable of suppressing whitening of the tire 10 surface due to impact. The tire 200 has a simpler structure than that of a conventional rubber-made tire, and is hence lighter in weight. The tire 200 of the present embodiment accordingly has high antifriction properties and durability.

In the manufacturing method of the tire of the present embodiment, when integrating together the tire case 17 with the cushion rubber 29 and the tread rubber 30A, the outer circumferential surface 17S of the tire case 17 is roughening treated, raising the bondability (adhesiveness) due to an anchor effect. Due to scuffing the resin material forming the tire case 17 by impacting the projectile material, the wetting properties of the adhesive are raised. The adhesive is thereby retained in a uniformly coated state on the outer circumferential surface 17S of the tire case 17, enabling the bond strength between the tire case 17 and the cushion rubber 29 to be secured.

In particular, even though corrugations are configured in the outer circumferential surface 17S of the tire case 17, roughening treatment is performed to the periphery of the indentations (the indentation walls and indentation bottom) by impacting projectile material into the indentations (the gaps 28A), enabling the bond strength between the tire case 17 and the cushion rubber 29 to be secured.

Moreover, layering the cushion rubber 29 within the region of roughening treatment of the outer circumferential surface 17S of the tire case 17 enables the bond strength between the tire case 17 and the cushion rubber to be effectively secured.

In the vulcanization process, when the cushion rubber 29 is vulcanized, the cushion rubber 29 flows into the roughened undulations formed in the outer circumferential surface 17S of the tire case 17 by roughening treatment. When the vulcanization is complete, the anchor effect is exhibited by the cushion rubber 29 that has flowed into the roughened undulations, raising the bond strength between the tire case 17 and the cushion rubber 29.

The tire 200 manufactured by such a tire manufacturing method secures the bond strength between the tire case 17 and the cushion rubber 29, namely, the bond strength between the tire case 17 and the tread 30 is secured through the cushion rubber 29. Separation of the outer circumferential surface 17S of the tire case 17 of the tire 200 and the cushion rubber 29, for example during running, is accordingly suppressed.

The outer circumference of the tire case 17 being formed by the reinforcing cord layer 28 raises the puncture resistance performance and cut resistance performance in comparison to an outer circumference formed by something other than the reinforcing cord layer 28.

Forming the reinforcing cord layer 28 by winding the covered cord member 26B raises the circumferential direction rigidity of the tire 200. Raising the circumferential direction rigidity suppresses creep of the tire case 17 (a phenomenon in which there is an increase in plastic deformation of the tire case 17 with time under constant stress), and improves pressure resistance to air pressure from the tire radial direction inside.

Moreover, the reinforcing cord layer 28 is configured including the covered cord member 26B, enabling a smaller difference in hardness between the tire case 17 and the reinforcing cord layer 28 than in cases in which the reinforcing cord 26A is simply fixed by the cushion rubber 29, thereby enabling even closer contact and better fixing of the covered cord member 26B to the tire case 17. This thereby enables incorporation of air, as described above, to be effectively prevented, enabling movement of the reinforcing cord member during running to be effectively suppressed.

Moreover, cases in which the reinforcing cord 26A is steel cord enable easy separation and recovery of the reinforcing cord 26A from the covered cord member 26B by heating when disposing of the tire, with this being advantageous from the perspective of recycling characteristics of the tire 200. The loss coefficient (tan $\delta$) of resin material is also lower than that of vulcanized rubber, enabling the tire rolling characteristics to be improved when the reinforcing cord layer 28 includes a lot of resin material. Moreover, the in-plane shear stiffness is larger for resin material than that of vulcanized rubber, with the advantages of excellent steering stability and abrasion resistance during running of the tire.

In the present embodiment, corrugations are formed on the outer circumferential surface 17S of the tire case 17; however, the invention is not limited thereto, and the outer circumferential surface 17S may be configured flat.

In the tire case 17, the reinforcing cord layer may be formed by covering a covered cord member, that has been wound and bonded onto the crown portion of a tire case, with a covering thermoplastic material. In such cases, a covering layer may be formed by ejecting the covering thermoplastic material in a melted or softened state onto the reinforcing cord layer 28. Moreover, without employing an extruder, the covering layer may be formed by heating a welding sheet to a melted or softened state, and then attaching to the surface (outer circumferential surface) of the reinforcing cord layer 28.

The second embodiment described above is configured with the tire case 17 formed by bonding case section parts (the tire case half parts 17A); however, the invention is not limited to such a configuration, and the tire case 17 may be integrally formed, by using a mold or the like.

In the tire 200 of the second embodiment, the bead portions 12 are fitted to the rim 20 so as to form an air chamber between the tire 200 and the rim 20, in what is referred to as a tubeless tire; however, the invention is not limited to such a configuration, and the tire 200 may for example be formed into a complete tube shape.

In the second embodiment, the cushion rubber 29 is disposed between the tire case 17 and the tread 30;

however, the invention is not limited thereto, and may be configured without disposing the cushion rubber 29.

The second embodiment is configured with the covered cord member 26B wound in a spiral shape onto the crown portion 16; however, the invention is not limited thereto, and the covered cord member 26B may be wound so as to be discontinuous in the width direction.

In the second embodiment, the covering resin material 27 forming the covered cord member 26B is a thermoplastic material, and configuration is made such that the covering resin material 27 is heated to a melted or softened state and the covered cord member 26B is welded to the outer circumferential surface of the crown portion 16; however, the invention is not limited to such a configuration. Configuration may be made in which, without heating the covering resin material 27, the covered cord member 26B is bonded to the outer circumferential surface of the crown portion 16, by using an adhesive or the like.

The covering resin material 27 forming the covered cord member 26B may be a thermosetting resin, and configuration may be made in which the covered cord member 26B is bonded to the outer circumferential surface of the crown portion 16 without heating, by using an adhesive or the like.

Moreover, configuration may be made in which the covering resin material 27 forming the covered cord member 26B is a thermosetting resin, and the tire case 17 is formed with a resin material. In such cases, the covered cord member 26B may be bonded to the outer circumferential surface of the crown portion 16, by an adhesive or the like, and the locations of the tire case 17 where the covered cord member 26B is disposed heated to a melted or softened state, so as to weld the covered cord member 26B to the outer circumferential surface of the crown portion 16.

Moreover, configuration may be made in which the covering resin material 27 forming the covered cord member 26B is a thermoplastic material, and the tire case 17 is formed with a resin material. In such cases, the covered cord member 26B may be bonded to the outer circumferential surface of the crown portion 16, by an adhesive or the like, and the covering resin material 27 heated to a melted or softened state while heating the locations of the tire case 17 where the covered cord member 26B is disposed to a melted or softened state, so as to weld the covered cord member 26B to the outer circumferential surface of the crown portion 16. Note that in cases in which both the tire case 17 and the covered cord member 26B are heated to a melted or softened state, bond strength is improved due to the good mixing between the two members. In cases in which the resin material forming the tire case 17 and the covering resin material 27 forming the covered cord member 26B are both resin materials, they are preferably the same type of thermoplastic material, and are particularly preferably the same thermoplastic material.

The outer circumferential surface 17S of the tire case 17 that has been subjected to roughening treatment may also be subjected to corona treatment, plasma treatment or the like, to activate the surface of the outer circumferential surface 17S and raise the hydrophilic properties before coating with an adhesive.

Moreover, the sequence for manufacturing the tire 200 is not limited to the sequence of the second embodiment, and may be appropriately modified.

Although embodiments have been explained above as embodiments of the invention, these embodiments are merely examples, and various modifications may be implemented within a range not departing from the spirit of the invention. Obviously the scope of rights of the invention is not limited to these embodiments.

## EXAMPLES

More specific explanation regarding the invention is given below based on Examples. However the invention is not limited thereto.

### Preparation of Pellets

A single, or plural of the resin materials illustrated in the Table below were kneaded using a biaxial extruder "LABO PLASTOMILL 50MR" manufactured by Toyo Seiki Seisaku-sho, Ltd. (at a mixing temperature of from 180°C to 200°C) to obtain pellets.

### Loss Coefficient (tan δ) Peak Temperature Measurement

Injection molding was performed employing the prepared pellets and an injection molding machine (SE30D, manufactured by Sumitomo Heavy Industries Co., Ltd.) with a molding temperature of from 180°C to 260°C and a temperature of a mold of from 50°C to 70°C, to obtain samples having a size of 30 mm × 130 mm and a thickness of 2.0 mm.

Each of the samples was subjected to die-cutting to prepare dumbbell-shaped test samples (Number 5 test samples) as defined in JIS K6251:1993.

Then, the tan δ of each of the dumbbell-shaped test samples was measured, the peak temperature of the tan δ of the resin material employed in the tire frame was derived, and then the Δ tan δ was calculated using Equality (X) described above, under conditions of measurement temperature range of -100°C to 150°C, temperature increase rate

of 6°C/minute, frequency of 20 Hz, and strain of 1%. The results are shown in the Tables below.

Evaluation of Impact resistance at low temperature and Whitening

The pellets were employed to prepare test samples (un-notched), performing injection molding employing an injection molding machine (SE30D, manufactured by Sumitomo Heavy Industries Co., Ltd.), and using a mold having a size of 10 mm × 100 mm and a thickness of 4 mm.

Impact resistance at low temperature was evaluated based on a Charpy impact test.

The test samples were cooled to a surface temperature of -40°C, and impact testing was performed employing a Charpy impact tester (trade name: No. 141, manufactured by Yasuda Seiki Seisakusho Ltd.). The measurement conditions were as follows.

Measurement Conditions

Nominal pendulum energy (weight); 25J, hammer lift angle; 150°, measurement method based on JIS K7111-1.

Impact resistance at low temperature and whitening occurrence in the test samples were evaluated by visual inspection of test samples on which the impact test had been performed, determining the extent of test sample deformation, and the occurrence of test sample surface whitening, based on the following criteria. The results from the test samples formed the basis for an evaluation index of impact resistance at low temperature and whitening of a tire frame employing the same resin material. The results are shownd in the following Tables.

Impact Resistance (Extent of Deformation)

A: Deformation not observed in test sample, or very little deformation of test sample
B: Fracture locations not observed in test sample, however deformation observed
C: Locations close to fracture observed in test sample, substantial deformation observed
D: Complete fracture of test sample

Whitening

A: Whitened locations not observed on test sample surface
B: Very little whitening observed on test sample surface
C: Substantial whitening observed on test sample surface

Table 1

| | Ex. 1 | Ex. 2 | Ex. 3 | Ex. 4 | Ex. 5 | Ex. 6 | Ex. 7 | Ex. 8 |
|---|---|---|---|---|---|---|---|---|
| Resin Material | PE1 | PA1 | PE2 | PA2 | PA3 | PE3 | Blend (x:y =1:9) of PA3 (x) and PA4 (y) | Blend (x:y = 1:9) of PA1 (x) and PTMG (y) |
| Peak Temperature of tan δ (°C) | -41 | -41 | -23 | -20 | -2 | 13 | 28 | -50 |
| Impact resistance at low temperature | A | A | A | A | A | B | B | A |
| Whitening | A | A | A | A | B | A | B | B |
| Δtan δ | 0.78× $10^{-4}$ | 5.13× $10^{-4}$ | 0.18× $10^{-4}$ | 2.03× 10-4 | 1.12× $10^{-4}$ | 1.29 ×$10^{-4}$ | 1.09 × $10^{-4}$ | 5.70 × $10^{-4}$ |

Table 2

| | Comparative Example 1 | Comparative Example 2 |
|---|---|---|
| Resin Material | PA4 | PS |

(continued)

| | Comparative Example 1 | Comparative Example 2 |
|---|---|---|
| Peak Temperature of tan δ (°C) | 31 | 110 |
| Impact resistance at low temperature | B | D |
| Whitening | C | D |
| Δtan δ | 1.09 × $10^{-4}$ | 76.6 × $10^{-4}$ |

The components in the Tables are as follows.

· PE1: thermoplastic polyester-based elastomer

("HYTREL 4767", manufactured by Du Pont-Toray Co., Ltd.)
• PE2: thermoplastic polyester-based elastomer
("HYTREL 5557", manufactured by Du Pont-Toray Co., Ltd.)
• PE3: thermoplastic polyester-based elastomer
("HYTREL 7247", manufactured by Du Pont-Toray Co., Ltd.)
·PA1: thermoplastic polyamide-based elastomer
(UBESTA XPA9040X1, manufactured by Ube Industries, Ltd.)

·PA2: thermoplastic polyamide-based elastomer

(UBESTAXPA9048X1, manufactured by Ube Industries, Ltd.)

·PA3: thermoplastic polyamide-based elastomer

(UBESTA XPA9055X1, manufactured by Ube Industries, Ltd.)

·PA4: thermoplastic polyamide-based elastomer

(UBESTAXPA9063X1, manufactured by Ube Industries, Ltd.)

·PTMG: polytetramethylene ether glycol-based resin

("Polytetramethylene oxide 1400", manufactured by Wako Pure Chemical Industries, Ltd.)

·PS: thermoplastic polystyrene-based elastomer

("TUFTEC H1043", manufactured by Asahi Kasei Corporation)

As can be seen from Table 1, the resin material of the Example that has a loss coefficient (tan δ) peak temperature of 30°C or lower exhibited excellent impact resistance at low temperature, and the extent of whitening after impact was desirable. It can accordingly be seen that a tire with a tire frame formed from the resin material of the Examples exhibits excellent impact resistance at low temperature. Moreover, it can be seen that a tire employing the resin material of the Example has excellent aesthetic characteristics since there is little whitening of the tire surface after impact. It can also be seen from the results in Table 1 that impact resistance at low temperature is further improved when the loss coefficient (tan δ) peak temperature is 0°C or lower, and when the peak temperature is -20°C or lower, both impact resistance at low temperature and resistance to whitening are excellent. In contrast, the resin material of the Comparative Example exhibited inferior impact resistance at low temperature, with obvious whitening occurring after impact.
Note that the disclosure of Japanese Patent Application No. 2012-045523 is incorporated into the present specification by reference.

## Claims

**1.** A tire comprising a circular tire frame formed from a resin material, the resin material having a loss coefficient (tan

δ) peak temperature of 30°C or lower.

**2.** The tire of claim 1, wherein the loss coefficient (tan δ) peak temperature of the resin material is 0°C or lower.

**3.** The tire of claim 1 or claim 2, wherein the resin material comprises a thermoplastic resin.

**4.** The tire of any one of claims 1 to 3, wherein the resin material comprises a thermoplastic elastomer.

**5.** The tire of any one of claims 1 to 4, wherein the resin material comprises at least one selected from the group consisting of a thermoplastic polyester-based elastomer and a thermoplastic polyamide-based elastomer.

**6.** The tire of any one of claims 1 to 5, wherein the resin material of the tire frame has a loss coefficient (tan δ) peak temperature of -20°C or lower.

**7.** The tire of any one of claims 1 to 6, wherein the resin material of the tire frame has a Δ tan δ satisfying $0 < \Delta \tan \lambda \leq 5.2 \times 10^{-4}$, calculated using Equality (X) below:

$$\text{Equality (X): } \Delta \tan \delta = (\tan \delta_{max}(T) - \tan \delta_{max\text{-}10°C}(T)) / 10$$

wherein, in Equality (X), $\tan \delta_{max}$ (T) is the loss coefficient (tan δ) at the peak temperature, and $\tan \delta_{max\text{-}10°C}$ (T) is a loss coefficient (tan δ) at a temperature that is lower than the peak temperature by 10°C.

FIG. A

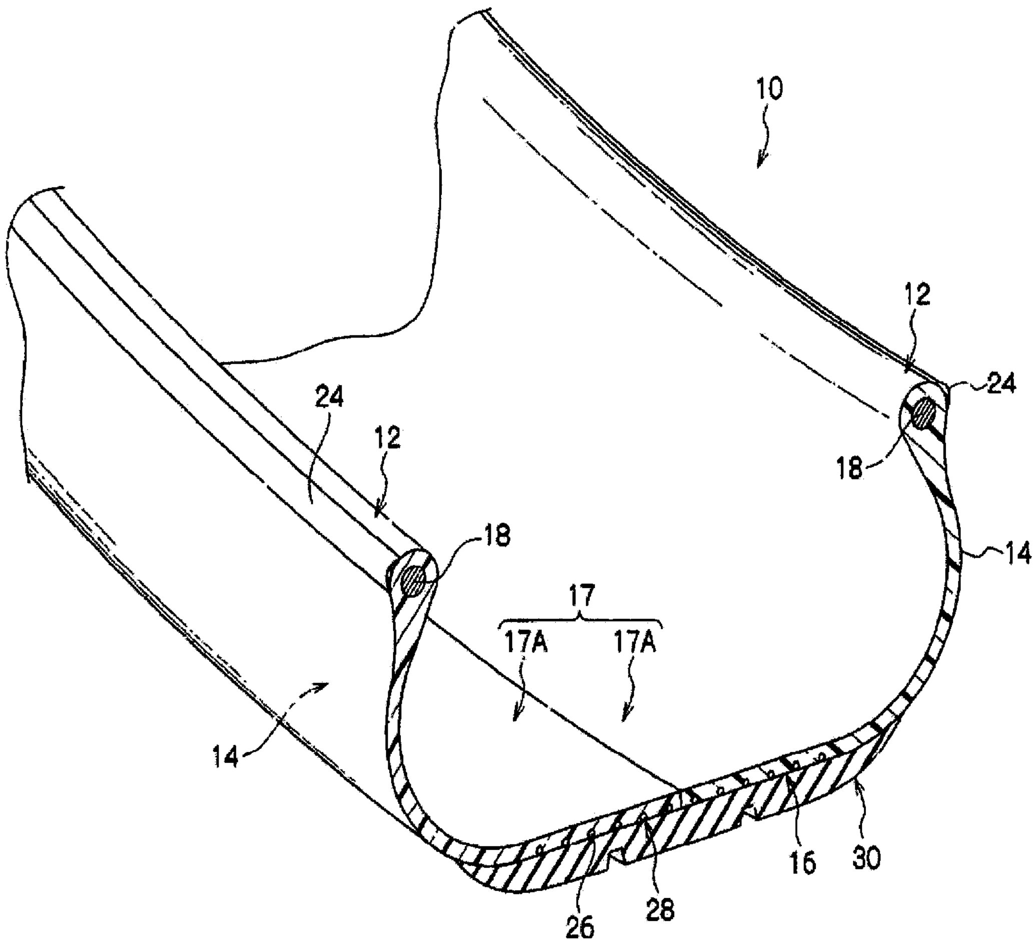

FIG. 1B

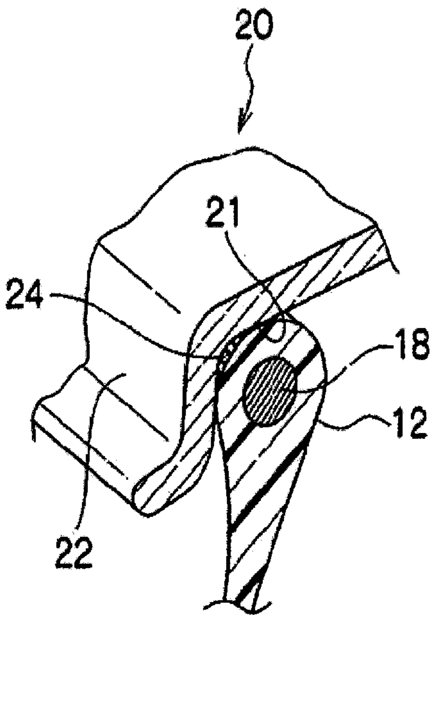

FIG. 2

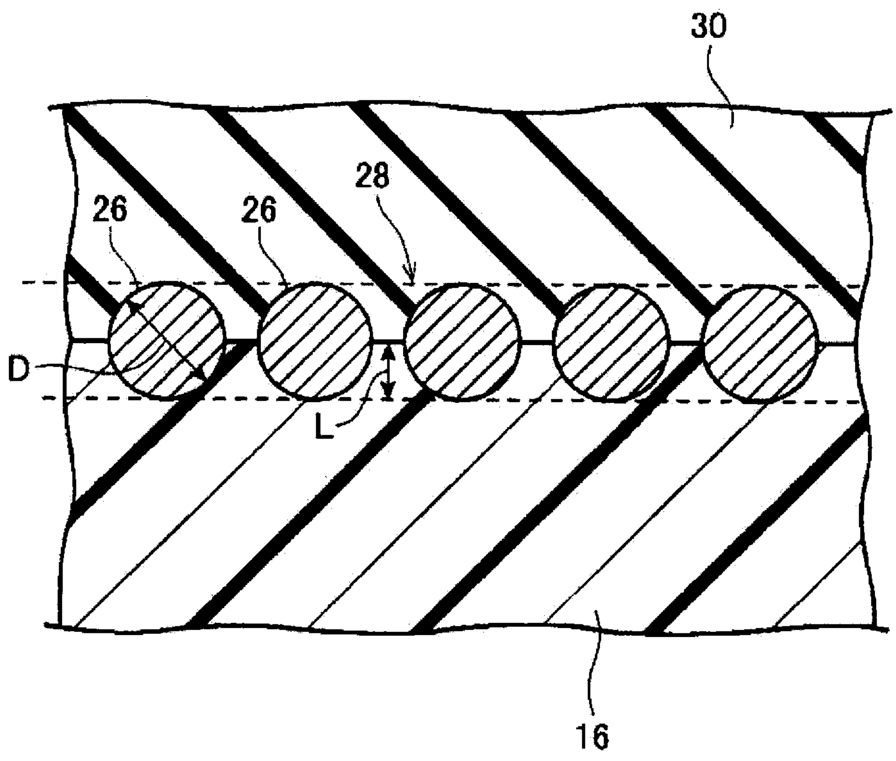

FIG. 3

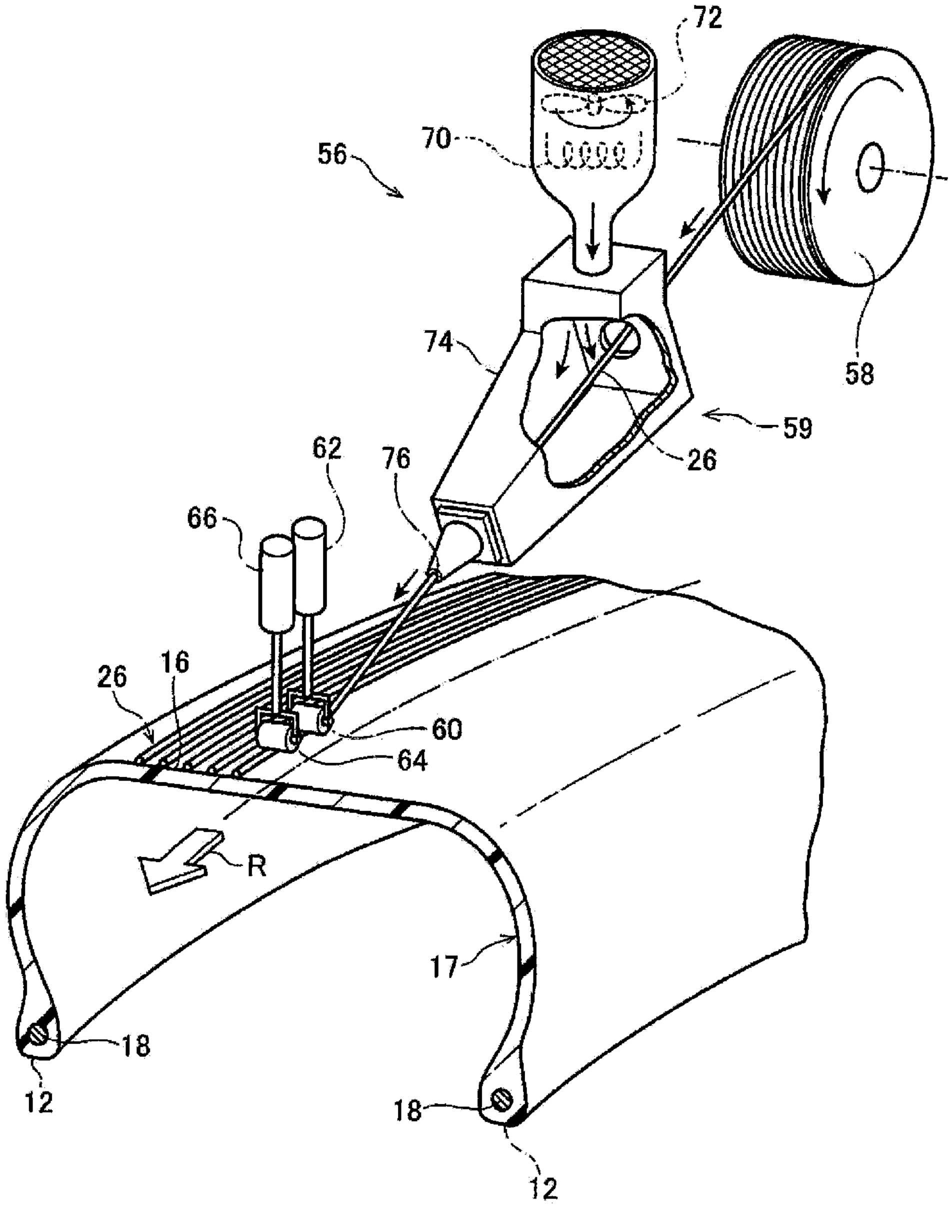

FIG. 4A

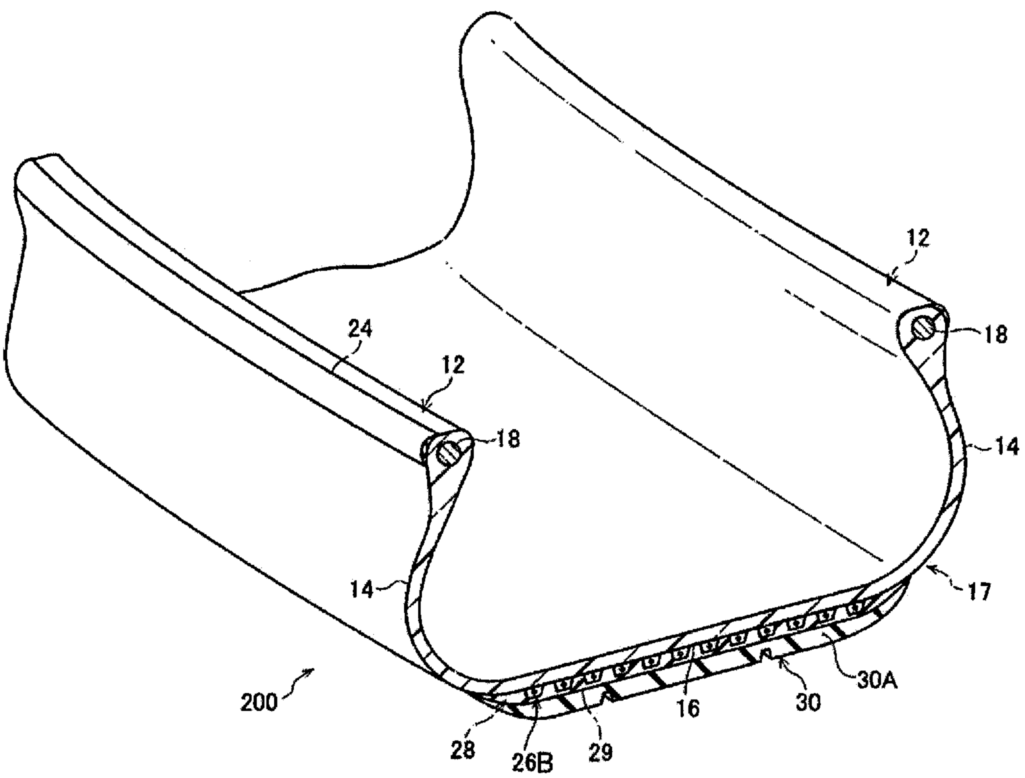

FIG. 4B

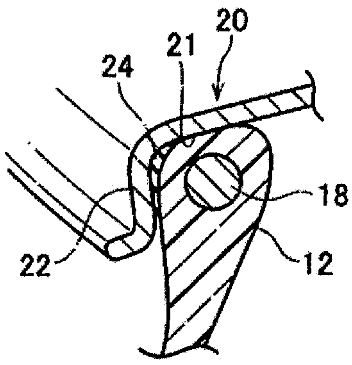

FIG. 5

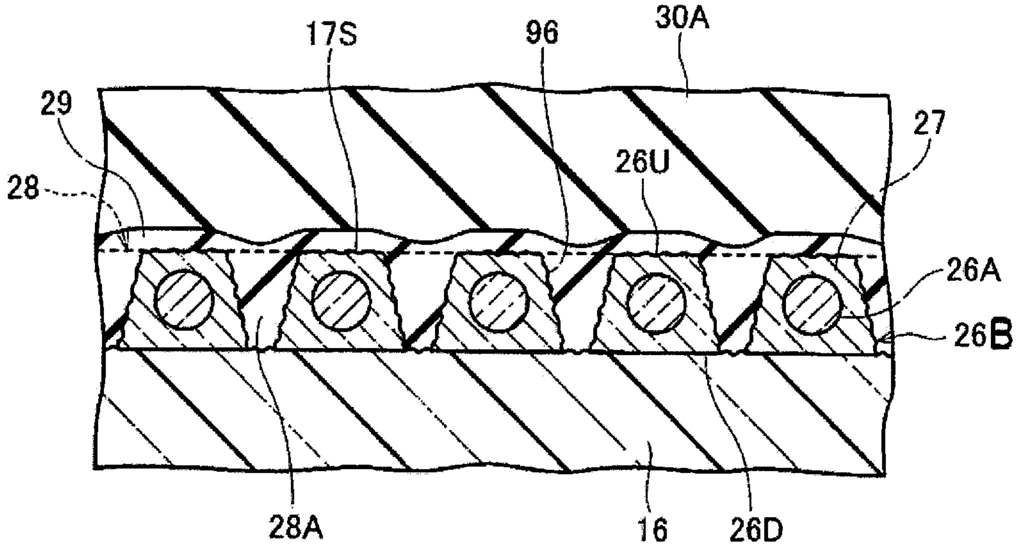

**INTERNATIONAL SEARCH REPORT**

International application No. PCT/JP2013/055585

A. CLASSIFICATION OF SUBJECT MATTER
*B60C5/01*(2006.01)i, *B60C1/00*(2006.01)i, *B60C9/00*(2006.01)i, *C08L67/00*(2006.01)i, *C08L77/00*(2006.01)i

According to International Patent Classification (IPC) or to both national classification and IPC

B. FIELDS SEARCHED

Minimum documentation searched (classification system followed by classification symbols)
B60C5/01, B60C1/00, B60C9/00, C08L67/00, C08L77/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2012-35500 A (Bridgestone Corp.), 23 February 2012 (23.02.2012), paragraphs [0025] to [0052]; fig. 1 to 2 (Family: none) | 1-7 |
| Y | JP 2008-143484 A (Bridgestone Corp.), 26 June 2008 (26.06.2008), paragraphs [0041] to [0043], [0047] (Family: none) | 1-7 |
| A | JP 2006-348149 A (The Yokohama Rubber Co., Ltd.), 28 December 2006 (28.12.2006), paragraphs [0012] to [0013] (Family: none) | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 March, 2013 (27.03.13) | 09 April, 2013 (09.04.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/055585

C (Continuation). DOCUMENTS CONSIDERED TO BE RELEVANT

| Category* | Citation of document, with indication, where appropriate, of the relevant passages | Relevant to claim No. |
|---|---|---|
| A | JP 2012-530155 A (Arizona Chemical Co. LLC), 29 November 2012 (29.11.2012), paragraphs [0011] to [0012] & WO 2010/144890 A2 | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003104008 A
- JP H03143701 A
- JP 4501326 B
- JP H05331256 A
- JP 2012045523 A